# EUROPEAN PATENT SPECIFICATION

(11) **EP 1 485 806 B1**
(45) Date of publication and mention of the grant of the patent: **19.08.2009**
(21) Application number: 03744921.2
(22) Date of filing: 20.03.2003
(51) Int. Cl.: G06F 11/20

(54) **IMPROVEMENTS RELATING TO FAULT-TOLERANT COMPUTERS**
VERBESSERUNGEN FÜR FEHLERTOLERANTE RECHNER
AMELIORATIONS APPORTEES A DES ORDINATEURS INSENSIBLES AUX DEFAILLANCES

(30) Priority: 20.03.2002 GB 0206604
(43) Date of publication of application: 15.12.2004
(73) Proprietor: Neverfail Group PLC, Aldermaston, Berkshire RG7 4HR (GB)
(72) Inventor: SENF, Wouter, NL-1213 VL Hilversum (NL); GEORGE, Felicity Anne Wordsworth, Perthshire FK15 9NU (GB); STONES, Thomas, Perthshire FK15 0PD (GB)
(74) Representative: Ahmad, Sheikh Shakeel
(86) International application number: PCT/GB2003/001305
(87) International publication number: WO 2003/081430

(56) References cited:
- WO-A-97/27541
- US-A- 5 455 932
- US-A- 5 592 618
- US-A- 5 787 485

## Description

### Technical Field

The present invention concerns improvements relating to fault-tolerant computers. It relates particularly, although not exclusively, to a method of matching the status of a first computer such as a server with a second (backup) computer communicating minimal information to the backup computer to keep it updated so that the backup computer can be used in the event of failure of the first computer.

### Background Art

Client-server computing is a distributed computing model in which client applications request services from server processes. Clients and servers typically run on different computers interconnected by a computer network. Any use of the Internet is an example of client-server computing. A client application is a process or a program that sends messages to the server via the computer network. Those messages request the server to perform a specific task, such as looking up a customer record in a database or returning a portion of a file on the server's hard disk. The server process or program listens for the client requests that are transmitted via the network. Servers receive the requests and perform actions such as database queries and reading files.

An example of a client-server system is a banking application that allows an operator to access account information on a central database server. Access to the database server is gained via a personal computer (PC) client that provides a graphical user interface (GUI). An account number can be entered into the GUI along with how much money is to the withdrawn from, or deposited into, the account. The PC client validates the data provided by the operator, transmits the data to the database server, and displays the results that are returned by the server. A client-server environment may use a variety of operating systems and hardware from multiple vendors. Vendor independence and freedom of choice are further advantages of the client-server model. Inexpensive PC equipment can be interconnected with mainframe servers, for example.

The drawbacks of the client-server model are that security is more difficult to ensure in a distributed system than it is in a centralized one, that data distributed across servers needs to be kept consistent, and that the failure of one server can render a large client-server system unavailable. If a server fails, none of its clients can use the services of the failed server unless the system is designed to be fault-tolerant.

Applications such as flight-reservations systems and real-time market data feeds must be fault-tolerant. This means that important services remain available in spite of the failure of part of the computer systems on which the servers are running. This is known as "high availability". Also, it is required that no information is lost or corrupted when a failure occurs. This is known as "consistency". For high availability, critical servers can be replicated, which means that they are provided redundantly on multiple computers. To ensure consistent modifications of database records stored on multiple servers, transaction monitoring programs can be installed. These monitoring programs manage client requests across multiple servers and ensure that all servers receiving such requests are left in a consistent state, in spite of failures.

Many types of businesses require ways to protect against the interruption of their activities which may occur due to events such as fires, natural disasters, or simply the failure of servers which hold business-critical data. As data and information can be a company's most important asset, it is vital that systems are in place which enable a business to carry on its activities such that the loss of income during system downtime is minimized, and to prevent dissatisfied customers from taking their business elsewhere.

As businesses extend their activities across time zones, and increase their hours of business through the use of Internet-based applications, they are seeing their downtime windows shrink. End-users and customers, weaned on 24-hour automatic teller machines (ATMs) and payment card authorization systems, expect the new generation of networked applications to have high availability, or "100% uptime". Just as importantly, 100% uptime requires that recovery from failures in a client-server system is almost instantaneous.

Many computer vendors have addressed the problem of providing high availability by building computer systems with redundant hardware. For example, Stratus Technologies has produced a system with three central processing units (the computational and control units of a computer). In this instance the central processing units (CPUs) are tightly coupled such that every instruction executed on the system is executed on all three CPUs in parallel. The results of each instruction are compared, and if one of the CPUs produces a result that is different from the other two, that CPU having the different result is declared as being "down" or not functioning. Whilst this type of system protects a computer system against hardware failures, it does not protect the system against failures in the software. If the software crashes on one CPU, it will also crash on the other CPUs.

CPU crashes are often caused by transient errors, i.e. errors that only occur in a unique combination of events. Such a combination could comprise an interrupt from a disk device driver arriving at the same time as a page fault occurs in memory and the buffer in the computer operating system being full. One can protect against these types of CPU crashes by implementing loosely coupled architectures where the same operating system is installed on a number of computers, but there is no coupling between the two and thus the memory content of the computers is different.

Marathon Technologies and Tandem Computers (now part of Compaq) have both produced fault-tolerant computer systems that implement loosely coupled architectures.

The Tandem architecture is based on a combination of redundant hardware and a proprietary operating system. The disadvantage of this is that program applications have to be specially designed to run on the Tandem system. Whereas any Microsoft Windows ™-architecture requires proprietary hardware and thus off-the-shelf computers cannot be employed.

US5592618 describes a data copy validation technique in which primary data is compared to a copy of that data by generating check codes of the data to be validated at primary and secondary sites in a continuously running remote data shadowing system.

US5787485 describes a system in which a mirror set copy from a first storage device to a second storage device is performed in a computer system in which write requests are each associated with a reference label.

The present invention aims to overcome at least some of the problems described above.

### Summary of Invention

According to a first aspect of the invention there is provided a method of matching the status configuration of a first computer with the status configuration of a second (backup) computer for providing a substitute in the event of a failure of the first computer, the method comprising: receiving a plurality of requests at both the first computer and the second computer, the plurality of requests being initiated by at least one process on both the first and second computers; issuing a unique process sequence number to each request initiated by the at the least one process on both the first and second computers, the unique process sequence number being incremented when a request is received for the corresponding process; assigning a unique sequence number to each request received at the first computer in the order in which the requests are received and are to be executed on the first computer, the unique sequence number being incremented for each request received; receiving a demand from the second computer for a unique sequence number from the first computer; transferring the unique sequence numbers from the first computer to the second computer; storing the unique sequence number in the second computer; and assigning each unique sequence number to a corresponding one of the plurality of requests received at the second computer such that the requests can be executed on the second computer in the same order as that on the first computer wherein a request received at the second computer is executed when the current unique sequence number received from the first computer is one higher than the previous unique sequence number stored in the second computer.

One advantage of this aspect of the invention is that the status configuration of the first computer can be matched to the status configuration of the second computer using transfer of minimal information between the computers. Thus, the status configurations of the two computers can be matched in real-time. Moreover, the information that is exchanged between the two computers does not include any data which is stored on the first and second computers. Therefore any sensitive data stored on the first and second computers will not be passed therebetween. Additionally, any data operated on by the matching method cannot be reconstructed by intercepting the information passed between the two computers, thereby making the method highly secure.

The method is preferably implemented in software. The advantage of this is that dedicated hardware is not required, and thus applications do not need to be specially designed to operate on a system which implements the method.

A request may be an I/O instruction such as a "read" or "write" operation which may access a data file. The request may also be a request to access a process, or a non-deterministic function.

The transferring step preferably comprises encapsulating at least one unique sequence number in a message, and transferring the message to the second computer. Thus, a plurality of requests can be combined into a single message. This further reduces the amount of information which is transferred between the first and second computers and therefore increases the speed of the matching method. As small messages can be exchanged quickly between the first and the second computers, failure of the first computer can be detected quickly.

The plurality of requests are preferably initiated by at least one process on both the first and second computers, and the method preferably comprises returning the execution results to the process(es) which initiated the requests. A pair of synchronised processes is called a Never Fail process pair, or an NFpp.

The process sequence numbers may be used to access the unique sequence numbers which correspond to particular requests.

If the request is a call to a non-deterministic function the transferring step further comprises transferring the execution results to the second computer, and returning the execution results to the process(es) which initiated the requests.

Preferably the assigning step carried out on the second computer further comprises waiting for a previous request to execute before the current request is executed.

The matching method may be carried out synchronously or asynchronously.

In the synchronous mode, the first computer preferably waits for a request to be executed on the second computer before returning the execution results to the process which initiated the request. Preferably a unique sequence number is requested from the first computer prior to the sequence number being transferred to the second computer. Preferably the first computer only executes a request after the second computer has requested the unique sequence number which corresponds to that request. If the request is a request to access a file, the first computer preferably only executes a single request per file before transferring the corresponding sequence number to the second computer. However, the first computer may execute more than one request before transferring the corresponding sequence numbers to the second computer only if the requests do not require access to the same part of the file. The synchronous mode ensures that the status configuration of the first computer is tightly coupled to the status configuration of the backup computer.

In either mode, the matching method preferably further comprises calculating a first checksum when a request has executed on the first computer, and calculating a second checksum when the same request has executed on the second computer. If an I/O instruction or a non-deterministic function is executed, the method may further comprise receiving a first completion code when the request has executed on the first computer, and receiving a second completion code when the same request has executed on the second computer.

In the asynchronous mode, preferably the first computer does not wait for a request to be executed on the second computer before it returns the result of the process which initiated the request. Using the asynchronous matching method steps, the backup computer is able to run with an arbitrary delay (i.e. the first computer and the backup computer are less tightly coupled than in the synchronous mode). Thus, if there are short periods of time when the first computer cannot communicate with the backup computer, at most a backlog of requests will need to be executed.

The matching method preferably further comprises writing at least one of the following types of data to a data log, and storing the data log on the first computer: an execution result, a unique sequence number, a unique process number, a first checksum and a first completion code. The asynchronous mode preferably also includes reading the data log and, if there is any new data in the data log which has not been transferred to the second computer, transferring those new data to the second computer. This data log may be read periodically and new data can be transferred to the second computer automatically. Furthermore, the unique sequence numbers corresponding to requests which have been successfully executed on the second computer may be transferred to the first computer so that these unique sequence numbers and the data corresponding thereto can be deleted from the data log. This is known as "flushing", and ensures that all requests that are executed successfully on the first computer are also completed successfully on the backup computer.

The data log may be a data file, a memory-mapped file, or simply a chunk of computer memory.

In either mode, where the request is an I/O instruction or an inter-process request, the matching method may further comprise comparing the first checksum with the second checksum. Also, the first completion code may be compared with the second completion code. If either (or both) do not match, a notification of a fault condition may be sent. These steps enable the first computer to tell whether its status configuration matches that of the second (backup) computer and, if it does not match, the backup computer can take the place of the first computer if necessary.

Furthermore, the first checksum and/or first completion code may be encapsulated in a message, and this message may be transferred to the first computer prior to carrying out the comparing step. Again, this encapsulating step provides the advantage of being able to combine multiple checksums and/or completion codes in a single message, so that transfer of information between the two computers is minimised.

The matching method may further comprise synchronising data on the first and second computers prior to receiving the plurality of requests at both the first and second computers, the synchronisation step comprising: reading a data portion from the first computer; assigning a co-ordinating one of the unique sequence numbers to the data portion; transmitting the data portion with the co-ordinating sequence number from the first computer to the second computer; storing the received data portion to the second computer, using the co-ordinating sequence number to determine when to implement the storing step; repeating the above steps until all of the data portions of the first computer have been written to the second computer, the use of the co-ordinating sequence numbers ensuring that the data portions stored on the second computer are in the same order as the data portions read from the first computer.

The matching method may further comprise receiving a request to update the data on both the first and second computers, and only updating those portions of data which have been synchronised on the first and second computers. This, the status configuration of the first and second computers do not become mismatched when the updating and matching steps are carried out simultaneously.

The matching method may further comprise verifying data on both the first and second computers, the verification step comprising: reading a first data portion from the first computer; assigning a co-ordinating one of the unique sequence numbers to the first data portion; determining a first characteristic of the first data portion; assigning the transmitted co-ordinating sequence number to a corresponding second data portion to be read from the second computer; reading a second data portion from the second computer, using the co-ordinating sequence number to determine when to implement the reading step; determining a second characteristic of the second data portion; comparing the first and second characteristics to verify that the first and second data portions are the same; and repeating the above steps until all of the data portions of the first and second computers have been compared.

According to a yet further aspect of the invention there is provided a system for matching the status configuration of a first computer with the status configuration of a second (backup) computer, the system comprising: request management means arranged to execute a plurality of requests on both the first and the second computers, the plurality of requests being initiated by at least one process on both the first and second computers; issuing means for issuing a unique process sequence number to each request executed by the at least one process on both the first and second computers, the unique process sequence number being incremented by the issuing means when a request is received for the corresponding process; sequencing means for assigning a unique sequence number to each request received at the first computer in the order in which the requests are received and to be executed on the first computer, the unique sequence number being incremented for each request received; receiving means for receiving a demand from the second computer for a unique sequence number from the first computer; transfer means for transferring the unique sequence numbers from the first computer to the second computer; storing means arranged to store the unique sequence number in the second computer, and ordering means for assigning each sequence number to a corresponding one of the plurality of requests received at the second computer such that the requests can be executed on the second computer in the same order as that on the first computer wherein the second computer is arranged to execute a received request when current the unique sequence number received from the first computer is one higher than the previous unique sequence number stored in the storing means

The transfer means is preferably arranged to encapsulate the unique sequence numbers in a message, and to transfer the message to the second computer.

According to a further aspect of the invention there is given a method of providing a backup computer comprising: matching the status configuration of a first computer with the status configuration backup computer using the method described above; detecting a failure or fault condition in the first computer; and activating and using the backup server in place of the first computer. The using step may further comprise storing changes in the status configuration of the backup computer, so that these changes can be applied to the first computer when it is re-connected to the backup server.

Preferably, the transferring steps in the synchronisation and verification methods comprise encapsulating the unique sequence numbers in a message, and transferring the message to the second computer.

The present invention also extends to a method of matching the operations of a primary computer and a backup computer for providing a substitute in the event of a failure of the primary computer, the method comprising: matching the status configurations of the computers using the method of the first aspect of the present invention and using the unique sequence numbers to order corresponding ones of the same plurality of requests also received at the backup computer such that the requests can be executed on the second computer in the same order as that on the first computer.

The matching method may be implemented on three computers: a first computer running a first process, and second (first backup) and third (second backup) computers running respective second and third processes. Three synchronised processes are referred to as a "Never Fail process triplet". An advantage of utilising three processes on three computers is that failure of the first computer (or of the second or third computer) can be detected more quickly than using just two processes running on two computers.

The present invention also extends to a data carrier comprising a computer program arranged to configure a computer to implement the methods described above.

### Brief Description of Drawings

Presently preferred embodiments of the invention will now be described, by way of example only, with reference to the accompanying drawings, in which:-
Figure 1a is a schematic diagram showing a networked system suitable for implementing a method of matching the status of first and second servers according to at least first, second and third embodiments of the present invention;
Figure 1b is a schematic diagram of the NFpp software used to implement the presently preferred embodiments of the present invention;
Figure 2 is a flow diagram showing the steps involved in a method of coordinating a pair of processes on first and second computers to provide a matching method computers according to the first embodiment of the present invention;
Figure 3a is a schematic diagram showing the system of Figure 1a running multiple local processes;
Figure 3b is a flow diagram showing the steps involved in a method of coordinating multiple local processes to provide a matching method according to the second embodiment of the present invention;
Figure 4 is a flow diagram illustrating the steps involved in a method of coordinating non-deterministic requests to provide a matching method according to a third embodiment of the present invention;
Figure 5 is a flow diagram showing the steps involved in a method of synchronising data on first and second computers for use in initialising any of the embodiments of the present invention;
Figure 6 is a flow diagram showing the steps involved in a method of coordinating a pair of processes asynchronously to provide a matching method according to a fourth embodiment of the present invention;
Figure 7 is a flow diagram illustrating the steps involved in a method of verifying data on first and second computers for use with any of the embodiments of the present invention; and
Figure 8 is a schematic diagram showing a system suitable for coordinating a triplet of processes to provide a matching method according to a fifth embodiment of the present invention.

### Detailed Description of the Preferred Embodiments

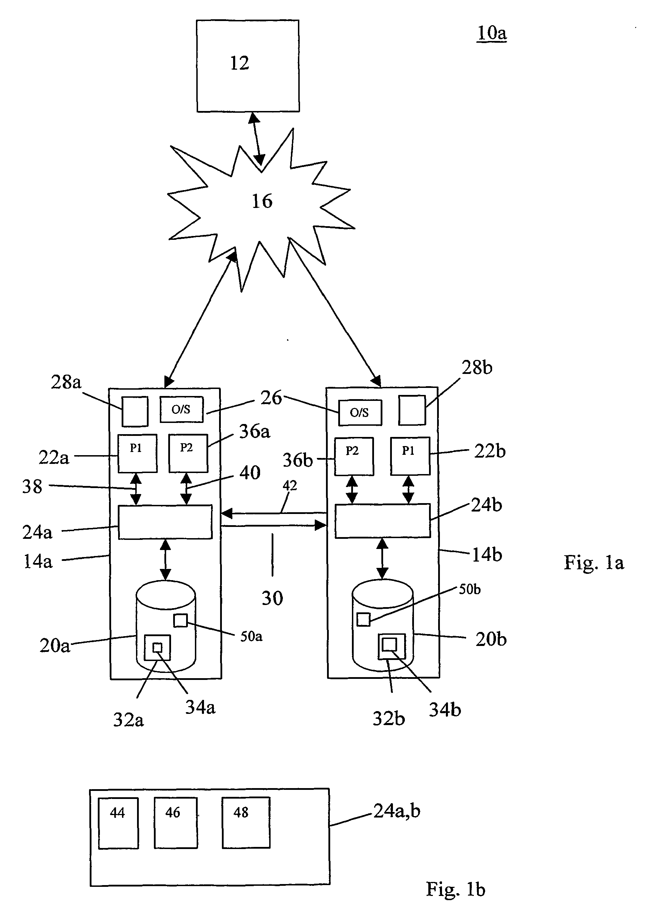

Referring to Figure 1a, there is now described a networked system 10a suitable for implementing a backup and recovery method according to at least the first, second and third embodiments of the present invention.

The system 10a shown includes a client computer 12, a first database server computer 14a and a second database server computer 14b. Each of the computers is connected to a network 16 such as the Internet through appropriate standard hardware and software interfaces. The first 14a database server functions as the primary server, and the second computer 14b functions as a backup server which may assume the role of the primary server if necessary.

The first 14a and second 14b database servers are arranged to host identical database services. The database service hosted on the second database server 14b functions as the backup service. Accordingly, the first database server 14a includes a first data store 20a, and the second database server 14b includes a second data store 20b. The data stores 20a and 20b in this particular example comprise hard disks, and so the data stores are referred to hereinafter as "disks". The disks 20a and 20b contain respective identical data 32a and 32b comprising respective multiple data files 34a and 34b.

Database calls are made to the databases (not shown) residing on disks 20a and 20b from the client computer 12. First 22a and second 22b processes are arranged to run on respective first 14a and second 14b server computers which initiate I/O instructions resulting from the database calls. The first and second processes comprise a first "process pair" 22 (also referred to as an "NFpp"). As the first process 22a runs on the primary (or first) server 14a, it is also known as the primary process. The second process is referred to as the backup process as it runs on the backup (or second) server 14b. Further provided on the first 14a and second 14b servers are NFpp software layers 24a and 24b which are arranged to receive and process the I/O instructions from the respective processes 22a and 22b of the process pair. The NFpp software layers 24a,b can also implement a sequence number generator 44, a checksum generator 46 and a matching engine 48, as shown in Figure 1b. A detailed explanation of the function of the NFpp software layers 24a and 24b is given later.

Identical versions of a network operating system 26 (such as Windows NT™ or Windows 2000 ™) are installed on the first 14a and second 14b database servers. Memory 28a and 28b is also provided on respective first 14a and second 14b database servers.

The first 14a and second 14b database servers are connected via a connection 30, which is known as the "NFpp channel". A suitable connection 30 is a fast, industry-standard communication link such as 100 Mbit or 1 Gbit Ethernet. The database servers 14a and 14b are arranged, not only to receive requests from the client 12, but to communicate with one another via the Ethernet connection 30. The database servers 14a and 14b may also request services from other servers in the network. Both servers 14a and 14b are set up to have exactly the same identity on the network, i.e. the Media Access Control (MAC) address and the Internet Protocol (IP) address are the same. Thus, the first and second database servers 14a and 14b are "seen" by the client computer 12 as the same server, and any database call made by the client computer to the IP address will be sent to both servers 14a and 14b. However, the first database server 14a is arranged to function as an "active" server, i.e. to both receive database calls and to return the results of the database calls to the client 12. The second database server 14b, on the other hand, is arranged to function as the "passive" server, i.e. to only receive and process database calls.

In this particular embodiment a dual connection is required between the database servers 14a and 14b to support the NFpp channel 30. Six Ethernet (or other suitable hardware) cards are thus needed for the networked system 10a: two to connect to the Internet (one for each database server) and four for the dual NFpp channel connection (two cards for each database server). This is the basic system configuration and it is suitable for relatively short distances (e.g. distances where routers and switches are not required) between the database servers 14a and 14b. For longer distances, one of the NFpp channel connections 30, or even both connections, may be run over the Internet 16 or an Intranet.

Assume the following scenario. The client computer 12 is situated in a call centre of an International bank. The call centre is located in Newcastle, and the database servers 14a and 14b are located in London. A call centre operator receives a telephone call from a customer in the UK requesting the current balance of their bank account. The details of the customer's bank account are stored on both the first 20a and second 20b disks. The call centre operator enters the details of the customer into a suitable application program provided on the client computer 12 and, as a result, a database call requesting the current balance is made over the Internet 16. As the database servers 14a and 14b have the same identity, the database call is received by both of the database servers 14a and 14b. Identical application programs for processing the identical database calls are thus run on both the first 14a and second 14b servers, more or less at the same time, thereby starting first 22a and second 22b processes which initiate I/O instructions to read data from the disks 20a and 20b.

The disks 20a and 20b are considered to be input-output (i.e. I/O) devices, and the database call thus results in an I/O instruction, such as "read" or "write". The identical program applications execute exactly the same program code to perform the I/O instruction. In other words, the behaviour of both the first 22a and second 22b processes is deterministic.

Both the first 22a and second 22b processes initiate a local disk I/O instruction 38 (that is, an I/O instruction to their respective local disks 20a and 20b). As the data 32a and 32b stored in respective first 20a and second 20b disks is identical, both processes "see" an identical copy of the data 32a,32b and therefore the I/O instruction should be executed in exactly the same way on each server 14a and 14b. Thus, the execution of the I/O instruction on each of the database servers 14a and 14b should result in exactly the same outcome.

Now assume that the customer wishes to transfer funds from his account to another account. The database call in this instance involves changing the customer's data 32a and 32b on both the first 20a and second 20b disks. Again, both processes 22a and 22b receive the same database call from the client computer 12 which they process in exactly the same way. That is, the processes 22a and 22b initiate respective identical I/O instructions. When the transfer of funds has been instructed, the customer's balance details on the first 20a and second 20b disks are amended accordingly. As a result, both before and after the database call has been made to the disks 20a and 20b, the "state" of the disks 20a and 20b and the processes 22a and 22b should be the same on both the first 14a and second 14b database servers.

Now consider that a second pair 36 of processes are running on the respective first 14a and second 14b database servers, and that the second pair of processes initiates an I/O instruction 40. As both the first 14a and second 14b servers run independently, I/O instructions that are initiated by the processes 22a and 36a running on the first server 14a may potentially be executed in a different order to I/O instructions that are initiated by the identical processes 22b and 36b running on the second server 14b. It is easy to see that this may cause problems if the first 22 and second 36 processes update the same data 32a,32b during the same time period. To ensure that the data 32a,32b on both first 14a and second 14b servers remain identical, the I/O instructions 38 and 40 must be executed in *exactly the same order*. The NFpp software layers 24a and 24b that are installed on the first 14a and second 14b servers implement a synchronisation/matching method which guarantees that I/O instructions 38,40 on both servers 14a, 14b are executed in exactly the same order.

The synchronisation method implemented by the NFpp software layers 24a and 24b intercepts *all* I/O instructions to the disks 20a and 20b. More particularly, the NFpp software layers 24a,24b intercept all requests or instructions that are made to the file-system driver (not shown) (the file system driver is a software program that handles I/O independent of the underlying physical device). Such instructions include operations that do not require access to the disks 20a,20b such as "file-open", "file-close" and "lock-requests". Even though these instructions do not actually require direct access to the disks 20a and 20b, they are referred to hereinafter as "disk I/Os instructions" or simply "I/O instructions".

In order to implement the matching mechanism of the present invention, one of the two database servers 14a,14b takes the role of synchronisation *coordinator*, and the other server acts as the synchronisation *participant*. In this embodiment, the first database server 14a acts as the coordinator server, and the second database server 14b is the participant server as the active server always assumes the role of the coordinator. Both servers 14a and 14b maintain two types of sequence numbers: 1) a sequence number that is increased for every I/O instruction that is executed on the first server 14a (referred to as an "SSN") and 2) a sequence number (referred to as a "PSN") for every process that is part of a NeverFail process pair which is increased every time the process initiates an I/O instruction.

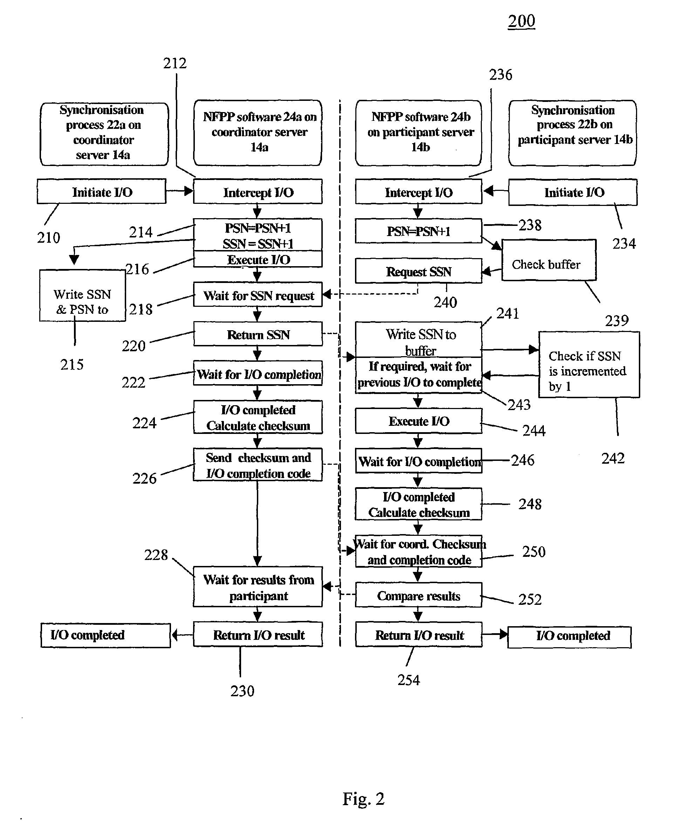

Referring now to Figure 2, an overview of a method 200 wherein an I/O instruction 38 is initiated by a NeverFail process pair 22a and 22b and executed on the first 14a and 14b second database servers is now described.

The method 200 commences with the first process 22a of the process pair initiating at Step 210 a disk I/O instruction 38a on the coordinator (i.e. the first) server 14a in response to a database call received from the client 12. The NFpp software 24a running on the coordinator server 14a intercepts at Step 212 the disk I/O 38a and increases at Step 214 the system sequence number (SSN) and the process sequence number (PSN) for the process 22a which initiated the disk I/O instruction 38a. The SSN and the PSN are generated and incremented by the use of the sequence number generator 44 which is implemented by the NFpp software 24. The SSN and the PSN are then coupled and written to the coordinator server buffer 28a at Step 215. The NFpp software 24a then executes at Step 216 the disk I/O instruction 38a e.g., opening the customer's data file 34a. The NFpp software 24a then waits at Step 218 for the SSN to be requested by the participant server 14b (the steps carried out by the participant server 14b are explained later).

When this request has been made by the participant server 14b, the NFpp software 24a reads the SSN from the buffer 28a and returns at Step 220 the SSN to the participant server 14b. The NFpp software 24a then waits at Step 222 for the disk I/O instruction 38a to be completed. On completion of the disk I/O instruction 38a, an I/O completion code is returned to the NFpp software 24a. This code indicates whether the I/O instruction has been successfully completed or, if it has not been successful, how or where an error has occurred.

Once the disk I/O instruction 38a has been completed, the NFpp software 24a calculates at Step 224 a checksum using the checksum generator 46. The checksum can be calculated by, for example, executing an "exclusive or" (XOR) operation on the data that is involved in the I/O instruction. Next, the NFpp software 24a sends at Step 226 the checksum and the I/O completion code to the participant server 14b. The checksum and the I/O completion code are encapsulated in a message 42 that is sent via the Ethernet connection 30. The NFpp software 24a then waits at Step 228 for confirmation that the disk I/O instruction 38b has been completed from the participant server 14b. When the NFpp software 24a has received this confirmation, the result of the I/O instruction 38a is returned at Step 230 to the process 22a and the I/O instruction is complete.

While the disk I/O instruction 38a is being initiated by the first process 22a, the same disk I/O instruction 38b is being initiated at Step 234 by the second process 22b of the process pair on the participant (i.e. second) server 14b. At Step 236, the disk I/O instruction 38b is intercepted by the NFpp software 24b, and at Step 238 the value of the PSN is increased by one. The participant server 14b does not increase the SSN. Instead, it asks the coordinator server 14a at Step 240 for the SSN that corresponds to its PSN. For example, let the PSN from the participant process 22b have a value of three (i.e. PSN_b = 3) indicating that the process 22b has initiated three disk I/O instructions which have been intercepted by the NFpp software 24b. Assuming that the coordinator process 22a has initiated at least the same number of disk I/O instructions (which have also been intercepted by the NFpp software 24a), it too will have a PSN value of three (i.e. PSN_a = 3) and, for example, an associated SSN of 1003. Thus, during Step 240, the participant server 14b asks the coordinator server 14a for the SSN value which is coupled to its current PSN value of 3 (i.e. SSN = 1003). At Step 241, the current SSN value is written to the participant server buffer 28b.

The participant NFpp software 24b then checks at Step 242 whether the SSN it has just received is one higher than the SSN for the previous I/O which is stored in the participant server buffer 28b. If the current SSN is one higher than the previous SSN, the NFpp software 24b "knows" that these I/O instructions are in the correct sequence and the participant server 14b executes the current I/O instruction 38b.

If the current SSN is more than one higher than the previous SSN stored in the participant server buffer 28b, the current disk I/O instruction 38b is delayed at Step 243 until the I/O operation with a lower SSN than the current SSN has been executed by the participant server 14b. Thus, if the previous stored SSN has a value of 1001, the participant NFpp software 24b "knows" that there is a previous I/O instructions which has been carried out on the coordinator server 14a and which therefore must be carried out on the participant server 14b before the current I/O instruction 38b is executed. In this example, the participant server 14b executes the I/O instructions associated with SSN=1002 before executing the current I/O operation having an SSN of 1003.

The above situation may occur when there is more than one process pair running on the coordinator and participant servers 14a and 14b. The table below illustrates such a situation:

| **SSN** | **Coordinator PSN** | **Participant PSN** |
|---|---|---|
| 1001 | A1 | A1 |
| 1002 | A2 | A2 |
| 1003 | A3 | B1 |
| 1004 | B1 | A3 |
| 1005 | A4 | B2 |
| 1006 | B2 | A4 |

The first column of the table illustrates the system sequence numbers assigned to six consecutive I/O instructions intercepted by the coordinator NFpp software 24a: A1, A2, A3, A4, B1 and B2. I/O instructions A1, A2, A3 and A4 originate from process A, and I/O instructions B1 and B2 originate from process B. However, these I/O instructions have been received by the NFpp software 24a,b in a different order on each of the servers 14a,b.

The request for the current SSN may arrive at the coordinator server 14a from the participant server 14b *before* the coordinator server 14a has assigned an SSN for a particular I/O instruction. In the table above, it can be seen that the participant server 14b might request the SSN for the I/O instruction B1 before B1 has been executed on the coordinator server 14a. This can happen for a variety of reasons, such as processor speed, not enough memory, applications which are not run as part of a process pair on the coordinator and/or participant servers, or disk fragmentation. In such cases, the coordinator server 14a replies to the SSN request from the participant server 14b as soon as the SSN has been assigned to the I/O instruction.

It can be seen from the table that the I/O instruction A3 will be completed on the coordinator server 14a (at Step 228) *before* it has been completed on the participant server 14b. The same applies to I/O instruction B1. This means that I/O instruction A4 can only be initiated on the coordinator server 14a after A3 has been completed on the participant server 14b. Thus, according to one scenario, there will never be a queue of requests generated by one process on one server while the same queue of requests is waiting to be completed by the other server. The execution of participant processes can never be behind the coordinator server by more than one I/O instruction in this scenario, as the coordinator waits at Step 228 for the completion of the I/O instruction from the participant server 14b.

Once the previous I/O instruction has been executed, the NFpp software 24b executes at Step 244 the current I/O instruction 38b and receives the participant I/O completion code. The NFpp software 24b then waits at Step 246 for the I/O instruction 38b to be completed. When the I/O instruction 38b has been completed, the NFpp software 24b calculates at Step 248 its own checksum from the data used in the I/O instruction 38b. The next Step 250 involves the participant NFpp software 24b waiting for the coordinator checksum and the coordinator completion code to be sent from the coordinator server 14a (see Step 226). At Step 252, the checksum and the I/O completion code received from the coordinator server 14a are compared with those from the participant server 14b (using the matching engine 48), and the results of this comparison are communicated to the coordinator server 14a (see Step 228).

If the outcome of executing the I/O instructions 38a and 38b on the respective coordinator 14a and the participant 14b servers is the same, both servers 14a and 14b continue processing. That is, the participant NFpp software 24b returns at Step 254 the result of the I/O instruction 38b to the participant process 22b, and the coordinator NFpp software 24a returns the result of the same I/O instruction 3 8a to the coordinator process 22a. The result of the I/O instruction 38a from the coordinator process 22a is then communicated to the client 12. However, as the participant server is operating in a passive (and not active) mode, the result of the I/O instruction 38b from its participant process 22b is not communicated to the client 12.

In exceptional cases, the results of carrying out the I/O instruction on the coordinator server 14a and participant server 14b may differ. This can only happen if one of the servers 14a,14b experiences a problem such as a full or faulty hard disk. The errant server (whether it be the participant 14b or the coordinator 14a server) should then be replaced or the problem rectified.

The data that is exchanged between the coordinator server 14a and the participant server 14b during Steps 240, 220, 226 and 252 is very limited in size. Exchanged data includes only sequence numbers (SSNs), I/O completion codes and checksums. Network traffic between the servers 14a and 14b can be reduced further by combining multiple requests for data in a single message 42. Thus, for any request from the participant server 14b, the coordinator server 14a may return not only the information that is requested, but all PSN-SSN pairs and I/O completion information that has not yet been sent to the participant server 14b. For example, referring again to the above table, if in an alternative scenario the coordinator server 14a is running ahead of the participant server 14b and has executed all of the six I/O instructions before the first I/O instruction A1 has been executed on the participant server, the coordinator server 14a may return all of the SSNs 1001 to 1006 and all the corresponding I/O completion codes and checksums in a single message 42. The participant server 14b stores this information in its buffer 28b at Step 241. The NFpp software 24b on the participant server 14b always checks this buffer 28b (at Step 239) before sending requests to the coordinator server 12 at Step 240.

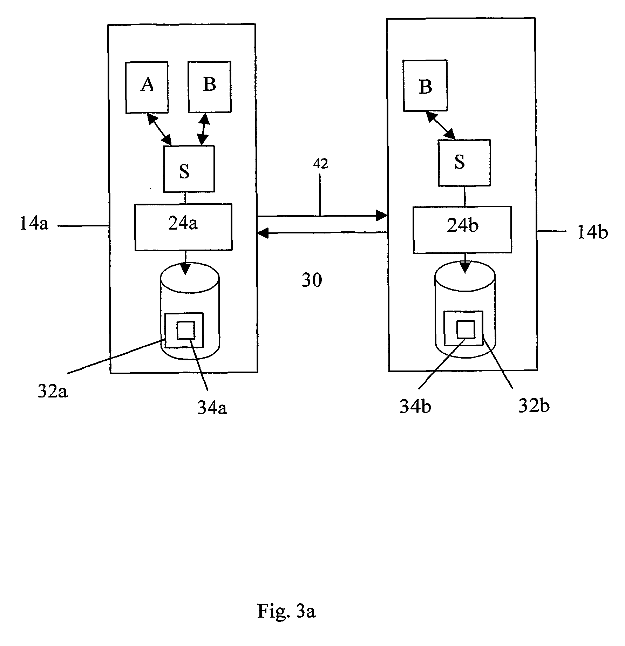

In addition to intercepting disk I/O instructions, the NFpp software 24 can also be used to synchronise inter-process communications in a second embodiment of the present invention. That is, communications between two or more processes on the same server 14. If a process requests a service from another local process (i.e. a process on the same server) this request must be synchronised by the NFpp software 24 or inconsistencies between the coordinator 14a and participant 14b servers may occur. Referring now to Figure 3a, consider that a process *S* on the coordinator server 14a receives requests from processes *A* and *B*, and the same process *S* on the participant server 14b receives requests from a single process *B*. *S* needs access to respective disk files 34a and 34b to fulfil the request. As the requesting processes *A* and *B* (or *B* alone) run independently on each server 14a,b, the requests may arrive in a different order on the coordinator 14a and the participant 14b servers. The following sequence of events may now occur.

On the coordinator server 14a process *A* requests a service from process *S.* Process *S* starts processing the request and issues an I/O instruction with PSN=*p* and SSN=*s*. Also on the coordinator server 14a, process *B* requests a service from process S which is queued until the request for process *A* is finished. Meanwhile, on the participant server 14b, process *B* requests a service from process *S*. It is given PSN=*p* and requests the corresponding SSN from the coordinator server 14a. Unfortunately the coordinator server 14a returns SSN=*s* which corresponds to the request for the results of process *A.* The NFpp software 24 synchronises inter-process communications to prevent such anomalies. In this scenario, the NFpp software 24a on the coordinator server 14a detects that the checksums of the I/O instructions differ and hence shuts down the participant server 14b, or at least the process *B* on the participant server.

As in the first embodiment of the invention, for inter-process communication both the coordinator 14a and participant 14b servers issue PSNs for every request, and the coordinator server 14a issues SSNs.

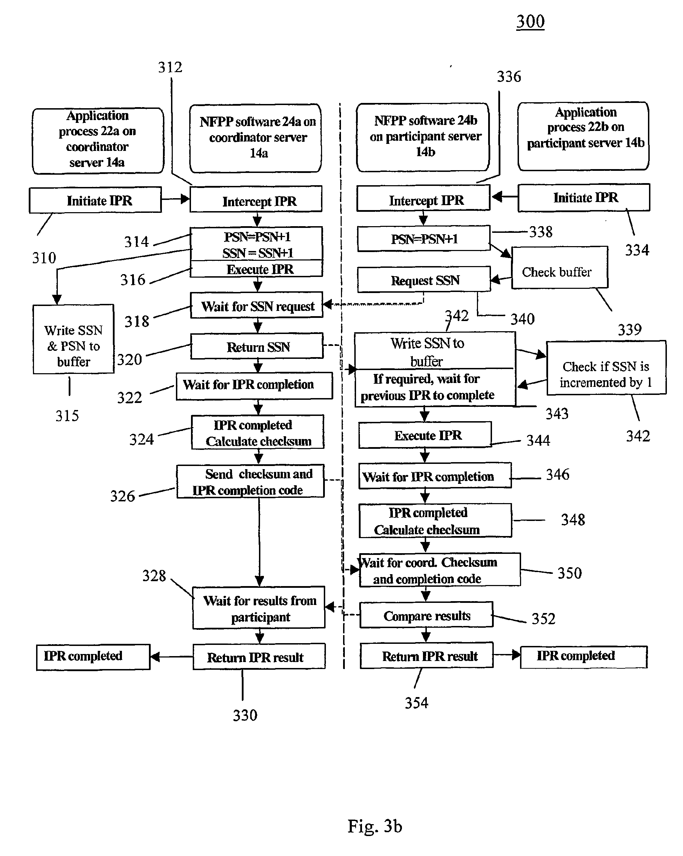

Referring now to Figure 3b, the steps involved in coordinating inter-process requests (or IPRs) according to the second embodiment are the same as those for the previous method 200 (the first embodiment) and therefore will not be explained in detail. In this method 300, the application process 22a on the coordinator server 14a initiates at Step 310 an IPR and this request is intercepted by the NFpp software 24a on the coordinator server 14a. At Step 334, the application process 22b on the participant server 14b also initiates an IPR which is intercepted by the participant NFpp software 24b. The remaining Steps 314 to 330 of method 300 which are carried out on the coordinator server 14a are equivalent to Steps 212 to 230 of the first method 200, except that the I/O instructions are replaced with IPRs. Steps 338 to 354 which are carried out on the participant server 14b are the same as Steps 238 to 254, except that the I/O instructions are replaced with IPRs.

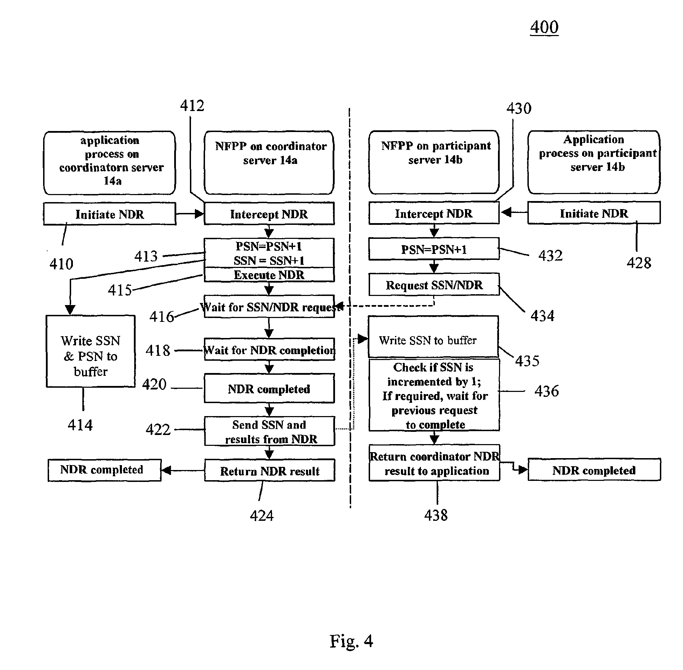

In some cases the operating system 26 carries out identical operations on the coordinator server 14a and the participant server 14b, but different results are returned. This may occur with calls to functions such as 'time' and 'random'. Identical applications running on the coordinator 14a and participant 14b servers may, however, require the results of these function calls to be exactly the same. As a simple example, a call to the 'time' function a microsecond before midnight on the coordinator server 14a, and a microsecond after midnight on the participant server 14b may result in a transaction being recorded with a different date on the two servers 14a and 14b. This may have significant consequences if the transaction involves large amounts of money. The NFpp software 24a, 24b can be programmed to intercept non-deterministic functions such as 'time' and 'random', and propagate the results of these functions from the coordinator server 14a to the participant server 14b. A method 400 of synchronising such non-deterministic requests on the first 14a and second 14b servers is now described with reference to Figure 4.

Firstly, the non-deterministic request (or NDR) is initiated at Step 410 by the application process 22a running on the coordinator server 14a. The NDR is then intercepted at Step 412 by the coordinator NFpp software 24a. Next, the PSN and SSN are incremented by one at Step 413 by the coordinator NFpp software 24a, and the SSN and PSN are coupled and written at Step 414 to the coordinator buffer 28a. Then the NDR is executed at Step 415. The coordinator server 14a then waits at Step 416 for the SSN and the result of the NDR to be requested by the participant server 14b. The coordinator server 14a then waits at Step 418 for the NDR to be completed. Upon completion of the NDR at Step 420, the coordinator server 14a sends at Step 422 the SSN and the results of the NDR to the participant server 14b via the NFpp channel 30. The NFpp 24a then returns at Step 424 the NDR result to the calling process 22a.

The same NDR is initiated at Step 428 by the application process 22b on the participant server 14b. The NDR is intercepted at Step 430 by the participant NFpp software 24b. Next, the participant NFpp software 24b increments at Step 432 the PSN for the process 22b. It then requests at Step 434 the SSN and the NDR from the coordinator server 14a by sending a message 42 via the NFpp channel 30 (see Step 416). When the participant server 14b receives the SSN and the results of the NDR from the coordinator server 14a (see Step 422), the NFpp software 24b writes the SSN to the participant buffer 28b at Step 435. The NFpp software then checks at Step 436 if the SSN has been incremented by one by reading the previous SSN from the buffer 28b and comparing it with the current SSN. As for the first 200, second 200 and third 300 embodiments, if necessary, the NFpp software 24b waits at Step 436 for the previous NDRs (or other requests and/or I/O instructions) to be completed before the current NDR result is returned to the application process 22b. Next, the NDR result received from the coordinator server 14a is returned at Step 438 to the application process 22b to complete the NDR.

Using this method 400, the NFpp software 24a,b on both servers 14a,b assigns PSNs to non-deterministic requests, but only the coordinator server 14a generates SSNs. The participant server 14b uses the SSNs to order and return the results of the NDRs in the correct order, i.e. the order in which they were carried out by the coordinator server 14a.

Network accesses (i.e. requests from other computers in the network) are also treated as NDRs and are thus coordinated using the NFpp software 24. On the participant server 14b network requests are intercepted but, instead of being executed, the result that was obtained on the coordinator server 14a is used (as for the NDRs described above). If active coordinator server 14a fails, the participant server 14b immediately takes activates the Ethernet network connection and therefore assumes the role of the active server so that it can both receive and send data. Given that the coordinator and participant servers exchange messages 42 through the NFpp channel 30 at a very high rate, failure detection can be done quickly.

As explained previously, with multiple process pairs 22 and 36 running concurrently, the processes on the participant server 14b may generate a queue of requests for SSNs. Multiple SSN requests can be sent to the coordinator server 14a in a single message 42 (i.e. a combined request) so that overheads are minimized. The coordinator server 14a can reply to the multiple requests in a single message as well, so that the participant server 14b receives multiple SSNs which it can use to initiate execution of I/O instructions (or other requests) in the correct order.

Consider now that the coordinator system 14a fails while such a combined request is being sent to the coordinator server via the connection 30. However, suppose that upon failure of the coordinator server 14a the participant server 14b logs the changes made to the files 34a (for example at Step 244 in the first method 200). Suppose also that the failure of the coordinator server 14a is only temporary so that the files 34a on the coordinator server 14a can be re-synchronised by sending the changes made to the files 34b to the coordinator server 14a when it is back up and running, and applying these changes to the coordinator files 34a. Unfortunately, the coordinator server 14a may have executed several I/O instructions just before the failure occurred, and will therefore not have had the chance to communicate the sequence of these I/O instructions to the participant server 14b. As the coordinator server 14a has failed, the participant server will now assume the role of the coordinator server and will determine its own sequence (thereby issuing SSNs) thereby potentially executing the I/O instructions in a different order than that which occurred on the coordinator server 14a.

A different sequence of execution of the same I/O instructions may lead to differences in the program logic that is followed on both servers 14a and 14b and/or differences between the data 32a and 32b on the disks 20a and 20b. Such problems arising due to the differences in program logic will not become evident until the coordinator server 14a becomes operational again and starts processing the log of changes that was generated by the participant server 14b.

To avoid such problems (i.e. of the participant and co-ordinator servers executing I/O instructions in a different order) the NFpp software 24 *must* ensure that interfering I/O instructions (i.e. I/O instructions that access the same locations on disks 20a and 20b) are very tightly coordinated. This can be done in the following ways:
1. The NFpp software 24 will not allow the coordinator server 14a to run ahead of the participant server 14b, i.e. the coordinator server 14a will only execute an I/O instruction at Step 216 after the participant server 14b has requested at Step 240 the SSN for that particular I/O instructions.
2. The NFpp software 24 allows the coordinator server 14a to run ahead of the participant server 14b, but only allows the coordinator server 14a to execute a single I/O instruction per file 34 before the SSN for that I/O instruction is passed to the participant server 14b. This causes fewer delays than the previous option.
3. The NFpp software 24 allows the coordinator server 14a to execute at Step 216 multiple I/O instructions per file 34 before passing the corresponding SSNs to the participant server 14b (at Step 220), but only if these I/O instructions do not access the same part of the file 34. This further reduces delays in the operation of the synchronisation method (this is described later) but requires an even more advanced I/O coordination system which is more complex to program than a simpler system.

These three options can be implemented as part of the synchronous methods 200, 300 and 400.

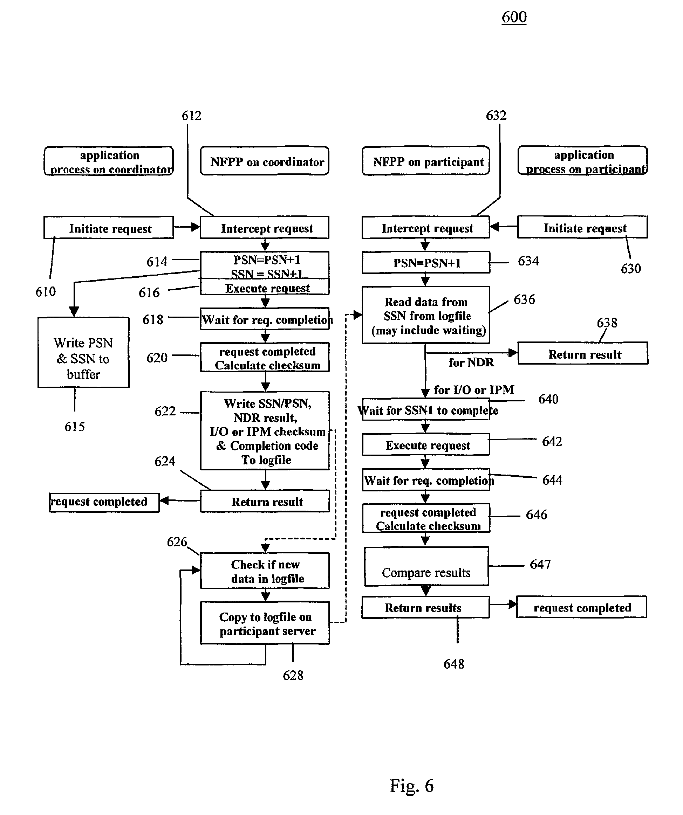

It is possible to coordinate the process pairs either synchronously or asynchronously. In the synchronous mode the coordinator server 14a waits for an I/O instruction to be completed on the participant server 14b before it returns the result of the I/O instruction to the appropriate process. In the asynchronous mode, the coordinator server 14a does not wait for I/O completion on the participant server 14b before it returns the result of the I/O instruction. A method 600 of executing requests asynchronously on the coordinator 14a and participant 14b servers is now described with reference to Figure 6.

The method 600 commences with the coordinator process 22a of the process pair initiating at Step 610 a request. This request may be an I/O instruction, an NDR or an IPM. The coordinator NFpp software 24a intercepts at Step 612 this request, and then increments at Step 614 both the SSN and the PSN for the process 22a which initiated the request. The SSN and the PSN are then coupled and written to the coordinator buffer 28a at Step 615. The NFpp software 24a then executes at Step 616 the request. It then waits at Step 618 for the request to be completed, and when the request has completed it calculates at Step 620 the coordinator checksum in the manner described previously. The NFpp software 24a then writes at Step 622 the SSN, PSN, the result of the request, the checksum and the request completion code to a log file 50a. At Step 624 the NFpp software 24a returns the result of the request to the application process 22a which initiated the request.

Next, at Step 626, the coordinator NFpp software 24a periodically checks if there is new data in the log file 50a. If there is new data in the log file 50a (i.e. the NFpp software 24a has executed a new request), the new data is encapsulated in a message 42 and sent at Step 628 to the participant server via the NFpp channel 30, whereupon it is copied to the participant log file 50b.

At the participant server 14b, the same request is initiated at Step 630 by the application process 22b. At Step 632 the request is intercepted by the participant NFpp software 22b, and the PSN for the initiating process is incremented by one at Step 634. Next, the data is read at Step 636 from the participant log file 50b. If the coordinator server 14a has not yet sent the data (i.e. the SSN, PSN, request results, completion code and checksum) for that particular request, then Step 636 will involve waiting until the data is received. As in the previously described embodiments of the invention, the participant server 14b uses the SSNs to order the requests so that they are carried out in the same order on both the coordinator 14a and participant servers 14b.

If the request is an NDR (a non-deterministic request), then at Step 638 the result of the NDR is sent to the participant application process 22b. If, however, the request is an I/O instruction or an IPM, the NFpp software 24b waits at Step 640 for the previous request to be completed (if necessary), and executes at Step 642 the current request. Next, the NFpp software 24b waits at Step 644 for the request to be completed and, once this has occurred, it calculates at Step 646 the participant checksum. At Step 647 the checksums and the I/O completion codes are compared. If they match, then the NFpp software 24b returns at Step 648 the results of the request to the initiating application process 22b on the participant server 14b. Otherwise, if there is a difference between the checksums and/or the I/O completions codes, an exception is raised and the errant server may be replaced and/or the problem rectified.

As a result of operating the process pairs 22a and 22b asynchronously, the coordinator server 14a is able to run at full speed without the need to wait for requests from the participant server 14b. Also, the participant server 14b can run with an arbitrary delay. Thus, if there are communication problems between the coordinator 14a and participant 14b servers which last only a short period of time, the steps of the method 600 do not change. In the worse case, if such communications problems occur, only a backlog of requests will need to be processed by the participant server 14b.

With the method 600 all log-records to the participant server 14b may be flushed when requests have been completed. Flushing of the log-records may be achieved by the participant server 14b keeping track of the SSN of the previous request that was successfully processed (at Step 642). The participant NFpp software 24b may then send this SSN to the coordinator server 14a periodically so that the old entries can be deleted from the coordinator log file 50a. This guarantees that all requests which are completed successfully on the coordinator server 14a also completed successfully on the participant server 14b.

As for the synchronous methods 200, 300 and 400, if the process 22b on the participant server fails, the following procedure can be applied. The NFpp software 24 can begin to log the updates made to the data 32a on the coordinator disk 20a and apply these same updates to the participant disk 20b. At some convenient time, the application process 22a on the coordinator server 14a can be stopped and then restarted in NeverFail mode, i.e. with a corresponding backup process on the participant server 14b.

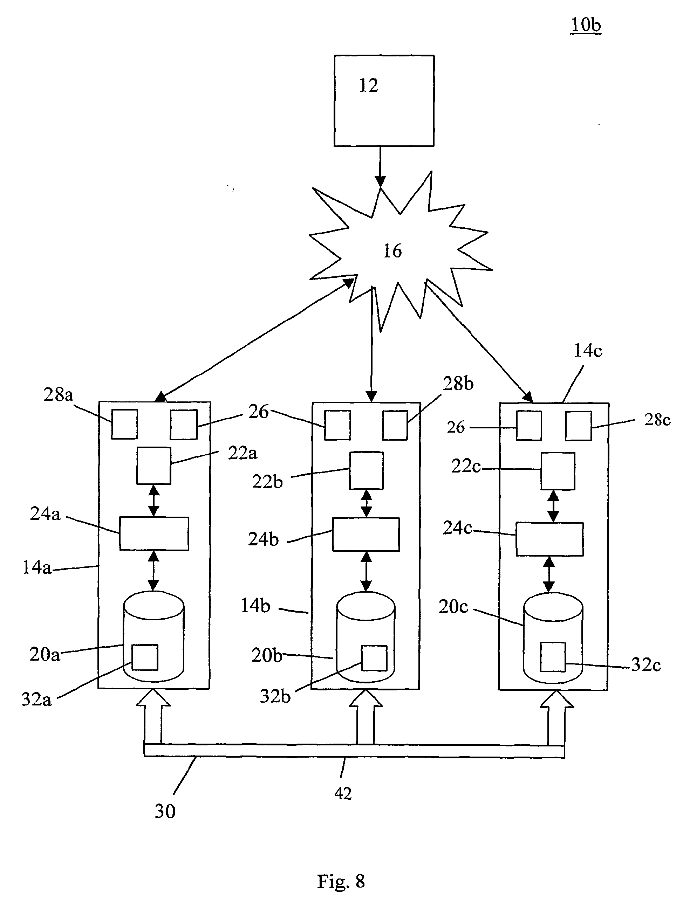

In another embodiment of the invention an NF process *triplet* is utilised. With reference to Figure 8 of the drawings there is shown a system 10b suitable for coordinating a process triplet. The system 10b comprises a coordinator server 14a, a first participant server 14b and a second participant server 14c which are connected via a connection 30 as previously described. Each of the computers is connected to a client computer 12 via the Internet 16. The third server 14c has an identical operating system 26 to the first 14a and second 14b servers, and also has a memory store (or buffer) 28c. Three respective processes 22a, 22b and 22c are arranged to run on the servers 14a, 14b and 14c in the same manner as the process pairs 22a and 22b.

As previously described, the third server 14c is arranged to host an identical database service to the first 14a and second 14b servers. All database calls made from the client computer are additionally intercepted by the NFpp software 24c which is installed on the third server 14c.

Consider that a single database call is received from the client 12 which results in three identical I/O instructions 38a, 38b and 38c being initiated by the three respective processes 22a, 22b and 22c. The coordinator server 14a compares the results for all three intercepted I/O instructions 38a, 38b and 38c. If one of the results of the I/O instructions differs from the other two, or if one of the servers does not reply within a configurable time window, the outlying process or server which has generated an incorrect (or no) result will be shut down.

As in the process pairs embodiments 200, 300 and 400, the information that is exchanged between the NeverFail process triplets 22a, 22b and 22c does not include the actual data that the processes operate on. It only contains checksums, I/O codes, and sequence numbers. Thus, this information can be safely transferred between the servers 14a, 14b and 14c as it cannot be used to reconstruct the data.

Process triplets allow for a quicker and more accurate detection of a failing server. If two of the three servers can "see" each other (but not the third server) then these servers assume that the third server is down. Similarly, if a server cannot reach the two other servers, it may declare itself down: this avoids the split-brain syndrome. For example, if the coordinator server 14a cannot see either the first 14b or the second 14c participant servers, it does not assume that there are problems with these other servers, but that it itself is the cause of the problem and it will therefore shut itself down. One of the participant servers 14b or 14c will then negotiate as to which server takes the role of the coordinator. A server 14a, 14b or 14c is also capable of declaring itself down if it detects that some of its critical resources (such as disks) are no longer functioning as they should.

The NeverFail process pairs technology relies on the existence of two identical sets of data 32a and 32b on the two servers 14a and 14b (or three identical sets of data 32a, 32b and 32c for the process triplets technology). There is therefore a requirement to provide a technique to copy data from the coordinator server 14a to the participant server(s). This is known as "synchronisation". The circumstances in which synchronisation may be required are: 1) when installing the NFpp software 24 for the first time; 2) restarting one of the servers after a fault or server failure (which may involve reinstalling the NFpp software); or 3) making periodic (e.g. weekly) updates to the disks 20a and 20b.

After data on two (or more) database servers has been synchronised, the data thereon should be identical. However, a technique known as "verification" can be used to check if, for example, the two data sets 32a and 32b on the coordinator server 14a and the participant server 14b really are identical. Note that although the following synchronisation and verification techniques are described in relation to a process pair, they are equally application to a process triplet running on three servers.

In principle, any method to synchronise the data 32a,b on the two servers 14a and 14b *before* the process pairs 22a and 22b are started in NeverFail mode can be used. In practice however, the initial synchronisation of data 32 is complicated by the fact that it is required to limit application downtime when installing the NFpp software 24. If the NFpp software 24 is being used for the first time on the first 14a and second 14b servers, data synchronisation must be completed before the application process 22b is started on the participant server 14b. However, the application process 22a may already be running on the coordinator server 14b.

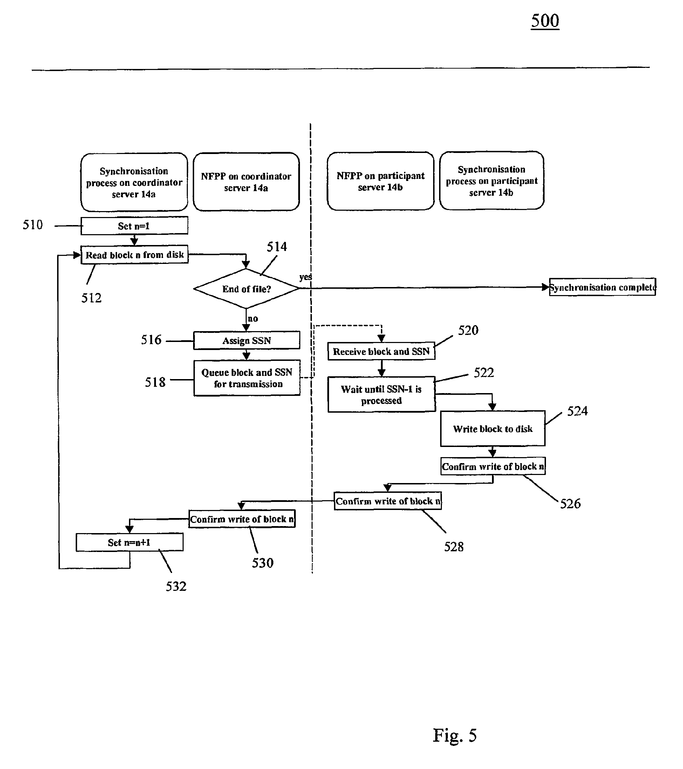

A method 500 for synchronising a single data file 34 is shown in Figure 5 and is now explained in detail.

Firstly, at the start of the synchronisation method a counter *n* is set at Step 510 to one. Next, the synchronisation process 22a on the coordinator server 14a reads at Step 512 the *n*th (i.e. the first) block of data from the file 34 which is stored on the coordinator disk 20a. Step 512 may also include encryption and/or compressing the data block. At Step 514, the coordinator NFpp software 24a checks whether the end of the file 34 has been reached (i.e. whether all the file has been read). If all of the file 34 has been read, then the synchronisation method 500 is complete for that file. If there is more data to be read from the file 34, an SSN is assigned at Step 516 to the *n*^{th} block of data. Then the coordinator NFpp software 24a queues at Step 518 the *n*^{th} block of data and its corresponding SSN for transmission to the participant server 14b via the connection 30, the SSN being encapsulated in a message 42.

At Step 520 the NFpp software 24b on the participant server 14b receives the *n*^{th} block of data, and the corresponding SSN. If necessary, the participant NFpp software 24b waits at Step 522 until the previous (i.e. the *(n-1)*^{th}) data block has been written to the participant server's disk 20b. Then, the *n*th block of data is written at Step 524 to the participant disk 20b by the participant synchronisation process 22b. If the data is encrypted and/or compressed, then Step 524 may also include decrypting and/or decompressing the data before writing it to the participant disk 20b. The synchronisation process 22b then confirms to the participant NFpp software 24b at Step 526 that the *n*th block of data has been written to the disk 20b.

When the participant NFpp software 24b has received this confirmation, it then communicates this fact at Step 528 to the NFpp software 24a on the coordinator server 14a. Next, the NFpp software 24a sends confirmation at Step 530 to the coordinator synchronisation process 22a so that the synchronisation process 22a can increment at Step 532 the counter (i.e., *n* = 2). Once the counter *n* has been incremented, control is returned to Step 512 where the second block of data is read from the file 34. Steps 512 to 532 are repeated until all the data blocks have been copied from the coordinator disk 20a to the participant disk 20b.

The synchronisation method 500 may be carried out while updates to the disks 20a and 20b are in progress. Inconsistencies between the data 32a on the coordinator disk 20a and the data 32b on the participant disk 20b are avoided by integrating software to carry out the synchronisation process with the NFpp software 24 which is updating the data. Such integration is achieved by using the NFpp software 24 to coordinate the updates made to the data 32. The NFpp software 24 does not send updates to the participant server 14b for the part of the file 34 which has not yet been synchronised (i.e. the data blocks of the file 34 which have not been copied to the participant server 34b). For example, if a customer's file 34a contains 1000 blocks of data, only the first 100 of which have been copied to the participant disk 20b, then updates to the last 900 data blocks which have not yet been synchronised will not be made. However, since the application process 22a may be running on the coordinator server 14a, updates may occur to parts of files that have already been synchronised. Thus, updates will be made to the first 100 blocks of data on the participant disk 20b which have already been synchronised. The updates made to the data on the coordinator disk 20a will then have to be transmitted to the participant server 14b in order to maintain synchronisation between the data thereon.

The SSNs utilised in this method 500 ensure that the synchronisation updates are done at the right moment. Thus, if a block of data is read by the synchronisation method 500 on the coordinator server 14a between the *n*^{th} and the *n*+*1*^{th} update of that file 34, the write operation carried out by the synchronisation process on the participant server 14b must also be done between the *n*^{th} and the *n*+*1*^{th} update of that file 34.

Once the data has been synchronised, the processes 22a and 22b can be run in the NeverFail mode. To do this, the process 22a on the coordinator server 14a is stopped and immediately restarted as one of a pair of processes (or a triplet of processes). Alternatively, the current states of the process 22a running on the coordinator server 14a can be copied to the participant server 14b so that the process 22a does not have to be stopped.

As explained above, during the synchronisation process, data files 34 are copied from the coordinator server 14a to the participant server 14b via the Ethernet connection 30. Even with effective data compression, implementing the synchronisation method 500 on the system 10a will result in a much higher demand for bandwidth than during normal operation when only sequence numbers (SSNs), checksums and I/O completion codes are exchanged. The synchronisation method 500 is also quite time consuming. For example, if a 100Mb Ethernet connection were to be used at 100% efficiency, the transfer of 40GB of data (i.e. a single hard disk) would take about one hour. In reality however, it takes much longer because there is an overhead in running data communication protocols. The disks 20a and 20b have to be re-synchronised every time the system 10a fails, even if it is only a temporary failure lasting a short period of time. The NFpp software 24 offers an optimization process such that if one server fails, the other server captures all the changes made to the disk and sends them to the server that failed when it becomes available again. Alternative approaches are to maintain a list of all offsets and lengths of areas on disk that were changed since a server became unavailable, or to maintain a bitmap where each bit tells whether a page in memory has changed or not. This optimisation process can also be applied in case of communication outages between the servers and for single-process failures.

As mentioned previously, the NFpp software 24 can be used to verify that a file 34a and its counterpart 34b on the participant server 14b are identical, even while the files are being updated by application processes via the NFpp software 24. This is done in the following manner.

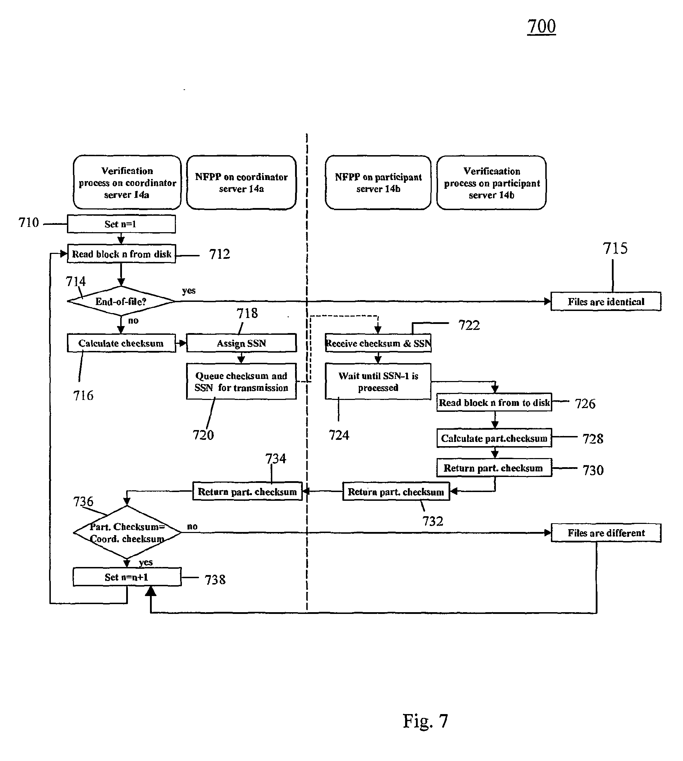

Referring now to Figure 7, the verification method 700 commences with the verification process 22a on the coordinator server 14a setting a counter *n* to one at Step 710. Next, the *n*^{th} block (i.e. the first block in this case) of data is read at Step 712 from the file 34a which is stored on the coordinator disk 20a. At Step 714, the verification process 22a checks whether the end of the file 34 has been reached. If it has, the files 34a and 34b on the coordinator 14a and participant 14b server are identical and the verification method 700 is terminated at Step 715. If the end of the file 34a has not been reached, the coordinator verification process 22a calculates at Step 716 the coordinator checksum. The value of the counter *n* is then passed to the coordinator NFpp software 24a which assigns at Step 718 an SSN to the *n*^{th} block of data from the file 34. Then, the coordinator NFpp software 24a queues at Step 720 the counter and the SSN for transmission to the participant server 14b via the connection 30. The SSN and the counter are transmitted to the participant server 14b as part of a verification message 42.

At Step 722 the NFpp software 24b on the participant server 14b receives the counter and the SSN. It then waits at Step 724 until the previous SSN (if one exists) has been processed. The verification process 22b on the participant server 14b then reads at Step 726 the *n*^{th} block of data from the participant disk 20b. The verification process 22b then calculates at Step 728 the participant checksum. When the participant checksum has been calculated it is then passed at Step 730 to the participant NFpp software 24b via the Ethernet connection 30. The participant NFpp software 24b returns at Step 732 the participant checksum to the coordinator NFpp software 24a via the Ethernet connection 30. Then, the coordinator NFpp software 24a returns the participant checksum to the coordinator verification process 22a at Step 734. The coordinator verification process 22a then compares as Step 736 the participant checksum with the coordinator checksum. If they are not equal, the respective files 34a and 34b on the participant 14b and coordinator 14a server are different. The process 22b on the participant server 14b can then be stopped and the files 34a and 34b re-synchronised using the synchronisation method 500 - either automatically or more typically with operator-intervention. Alternatively, verification process 22b may pass a list of the different data blocks to the synchronisation method 500, so that only this data will be sent to the coordinator server via the connection 30.

If the participant checksum and the coordinator checksum are equal, the counter *n* is incremented at Step 738 (i.e. *n* = 2), and control returns to Step 712 wherein the 2^{nd} block of data is read from the file 34a. Steps 712 to 738 are carried out until all of the data has been read from the file 34a and written to the participant disk 20b, or until the verification process is terminated for some other reason.

The verification method 700 can be done whilst updates to the disks 20a and 20b are in progress. This could potentially cause problems unless the verification of data blocks is carried out at the correct time in relation to the updating of specific blocks. However, as the reading of data 34b to the participant disk 20b is controlled by the order of the SSNs, the reading Step 726 will be carried out on the participant server 14b when the data is in exactly the same state as it was when it was read from the coordinator server 14a. Thus, once a particular block has been read, it takes no further part in the verification process and so can be updated before the end of the verification process on all the blocks is complete.

The verification process can also be undertaken periodically to ensure that the data 32a and 32b on the respective disks 20a and 20b is identical.

In summary, the present invention provides a mechanism that allows two (or three) processes to run exactly the same code against identical data 32,34 on two (or three) servers. At the heart of the invention is a software-based synchronisation mechanism that keeps the processes and the processes' access to disks fully synchronised, and which involves the transfer of minimal data between the servers.

Having described particular preferred embodiments of the present invention, it is to be appreciated that the embodiments in question are exemplary only and that variations and modifications such as will occur to those possessed of the appropriate knowledge and skills may be made without departure from the scope of the invention as set forth in the appended claims. For example, although the database servers are described as being connected via an Ethernet connection, any other suitable connection could be used. The database servers also do not have to be in close proximity, and may be connected via a Wide Area Network. Additionally, the process pairs (or triplets) do not have to be coordinated on database servers. Any other type of computers which require the use of process pairs to implement a recovery system and/or method could be used. For example, the invention could be implemented on file servers which maintain their data on a disk. Access to this database could then be gained using a conventional file system, or a database management system such as Microsoft SQL Server ™.

## Claims

1. A method of matching the status configuration of a first computer (14a) with the status configuration of a second (backup) computer (14b) for providing a substitute in the event of a failure of the first computer, the method comprising:
receiving a plurality of requests at both the first computer and the second computer, the plurality of requests being initiated by at least one process on both the first and second computers; said processes forming a process pair
issuing a unique process sequence number to each request initiated by the at the least one process on both the first and second computers, the unique process sequence number being incremented when a request is received from the corresponding process (214, 238);
assigning a unique sequence number to each request received at the first computer in the order in which the requests are received and are to be executed on the first computer, the unique sequence number being incremented for each request received (214);
receiving a demand from the second computer for each unique sequence number from the first computer (220);
transferring the unique sequence numbers from the first computer to the second computer (222);
storing the unique sequence number in the second computer (241); and
assigning each unique sequence number to a corresponding one of the plurality of requests received at the second computer such that the requests can be executed on the second computer in the same order as that on the first computer
wherein a request received at the second computer is executed when the current unique sequence number received from the first computer is one higher than the previous unique sequence number stored in the second computer (242).

2. A method according to Claim 1, the method further comprising returning the results of executing the requests to the at least one process which initiated the requests.

3. A method according to Claim 2, further comprising executing a request on the second computer before returning the execution results of the corresponding request on the first computer to the process which initiated the request.

4. A method according to Claim 2 , wherein the first computer returns the result of the process which initiated the request prior to execution of the request on the second computer.

5. A method according to any preceding claim, wherein the transferring step comprises encapsulating at least one unique sequence number in a message, and sending the message to the second computer.

6. A method according to any preceding claim, wherein the plurality of requests includes at least one type of request selected from the group comprising an I/O instruction and an inter-process request.

7. A method according to Claim 6, further comprising calculating a first checksum when a request has executed on the first computer, and calculating a second checksum when the same request has executed on the second computer.

8. A method according to Claim 7, further comprising comparing the first checksum with the second checksum and, if they are not equal, signalling a fault condition.

9. A method according to any of Claims 6 to 8, further comprising receiving a first completion code when a request has executed on the first computer, and receiving a second completion code when the same request has executed on the second computer.

10. A method according to Claim 9, further comprising comparing the first completion code with the second completion code and, if they are not equal, signalling a fault condition.

11. A method according to any of Claims 7 to 10, further comprising encapsulating the first checksum and/or the first completion code in a message, and transferring the message to the first computer prior to carrying out the comparing step.

12. A method according to any of Claims 7 to 11, further comprising writing to a data log at least one type of data selected from the group comprising: an execution result, a unique sequence number, a unique process number, a first checksum and a first completion code, and storing the data log on the first computer.

13. A method according to Claim 12, further comprising reading the data log and, if there is any new data in the data log which has not been transferred to the second computer, transferring that new data to the second computer.

14. A method according to Claim 13, wherein the reading step occurs periodically and the presence of new data causes the transferring step to occur automatically.

15. A method according to any of Claims 12 to 14, wherein the unique sequence numbers corresponding to requests which have been successfully executed on the second computer are transferred to the first computer, and the method further comprises deleting these unique sequence numbers and the data corresponding thereto from the data log.

16. A method according to any of Claims 1 to 5, wherein the plurality of requests includes a non-deterministic function.

17. A method according to Claim 16 as dependent on Claim 2, wherein the transferring step further comprises transferring the execution results to the second computer, and returning the execution results to the at least one process which initiated the requests.

18. A method according to Claim 1, further comprising executing a request after receiving the demand for the unique sequence number that corresponds to that request from the second computer.

19. A method according to any preceding claim, wherein one of the plurality of requests is a request to access a file, and the method further comprises executing a single request per file before transferring the corresponding sequence number to the second computer.

20. A method according to any of Claims 1 to 18, wherein one of the plurality of requests is a request to access a file, and the method further comprises executing a plurality of requests before transferring the corresponding unique sequence numbers of the plurality to the second computer, the executing step being carried out if the requests do not require access to the same parts of the file.

21. A method according to any preceding claim, wherein the assigning step on the second computer further comprises waiting for a previous request on the same computer to execute before the current request is executed.

22. A method according to any preceding claim, further comprising synchronising data on both the first and second computers, the synchronising step comprising:
reading a data portion from the first computer;
assigning a co-ordinating one of the unique sequence numbers to the data portion;
transmitting the data portion with the co-ordinating sequence number from the first computer to the second computer;
storing the received data portion to the second computer, using the co-ordinating sequence number to determine when to implement the storing step;
repeating the above steps until all of the data portions of the first computer have been written to the second computer, the use of the co-ordinating sequence numbers ensuring that the data portions stored on the second computer are in the same order as the data portions read from the first computer.

23. A method according to Claim 22, further comprising receiving a request to update the data on both the first and second computers, and only updating those portions of data which have been synchronised on the first and second computers.

24. A method according to any preceding claim, further comprising verifying data on both the first and second computers, the verifying step comprising:
reading a first data portion from the first computer;
assigning a co-ordinating one of the unique sequence numbers to the first data portion;
determining a first characteristic of the first data portion;
assigning the transmitted co-ordinating sequence number to a corresponding second data portion to be read from the second computer;
reading a second data portion from the second computer, using the co-ordinating sequence number to determine when to implement the reading step;
determining a second characteristic of the second data portion;
comparing the first and second characteristics to verify that the first and second data portions are the same; and
repeating the above steps until all of the data portions of the first and second computers have been compared.

25. A system for matching the status configuration of a first computer (14a) with the status configuration of a second (backup) computer (14b), the system comprising:
request management means arranged to execute a plurality of requests on both the first and the second computers, the plurality of requests being initiated by at least one process on both the first and second computers; said processes forming a process pair
issuing means for issuing a unique process sequence number to each request executed by the at least one process on both the first and second computers, the unique process sequence number being incremented by the issuing means when a request is received from the corresponding process (214, 238);
sequencing means for assigning a unique sequence number to each request received at the first computer in the order in which the requests are received and to be executed on the first computer, the unique sequence number being incremented for each request received (214);
receiving means for receiving a demand from the second computer for each unique sequence number from the first computer (220);
transfer means for transferring the unique sequence numbers from the first computer to the second computer (222);
storing means arranged to store the unique sequence number in the second computer (241), and
ordering means for assigning each sequence number to a corresponding one of the plurality of requests received at the second computer such that the requests can be executed on the second computer in the same order as that on the first computer
wherein the second computer is arranged to execute a received request when the current unique sequence number received from the first computer is one higher than the previous unique sequence number stored in the storing means (242).

26. A system according to Claim 25, wherein the transfer means is further arranged to encapsulate the unique sequence numbers in a message, and to transfer the message to the second computer.

27. A system according to Claim 25 or Claim 26, wherein the first and second computers comprise servers.

28. A method of providing a backup computer comprising: matching the status configuration of a first computer with the status configuration backup computer using the method claimed in any of Claims 1 to 24; detecting a failure or fault condition in the first computer; and activating and using the backup computer in place of the first computer.

29. A method according to Claim 28, wherein the using step further comprises storing changes in the status configuration of the backup computer so that the changes can be applied to the first computer at a later point in time.

30. A method as claimed in Claim 1, the method further comprising:
additionally receiving a plurality of requests at a third (second backup) computer;
transferring the unique sequence numbers from the first computer to the second and third computers; and
assigning each unique sequence number to a corresponding one of the plurality of requests received at the second and third computers such that the requests can be executed on the second and third computers in the same order as that on the first computer.

31. A system as claimed in Claim 25, wherein:
the request management means is additionally arranged to execute a plurality of requests on a third computer;
the transfer means is arranged to transfer the unique sequence numbers from the first computer to the second and third computers; and
the ordering means is arranged to assign each sequence number to a corresponding one of the plurality of requests received at the second and third computers such that the requests can be executed on the second and third computers in the same order as on the first computer.

32. A data carrier comprising a computer program arranged to configure a computer to implement the method claimed in any one of Claims 1 to 24 and Claims 28 to 31.

## Patentansprüche

1. Verfahren zum Abgleichen der Statuskonfiguration eines ersten Rechners (14a) mit der Statuskonfiguration eines zweiten (Reserve-) Rechners (14b) zum Bereitstellen eines Ersatzes im Fall eines Ausfalls des ersten Rechners, wobei das Verfahren Folgendes umfasst:
Empfangen von mehreren Anforderungen sowohl auf dem ersten Rechner als auch auf dem zweiten Rechner, wobei die mehreren Anforderungen durch mindestens einen Prozess sowohl auf dem ersten als auch auf dem zweiten Rechner initiiert werden, wobei die Prozesse ein Prozesspaar bilden;
Erteilen einer eindeutigen Prozesssequenznummer an jede durch den mindestens einen Prozess sowohl auf dem ersten als auch auf dem zweiten Rechner initiierte Anforderung, wobei die eindeutige Prozesssequenznummer inkrementiert wird, wenn eine Anforderung von dem entsprechenden Prozess empfangen wird (214, 238);
Zuweisen einer eindeutigen Sequenznummer zu jeder an dem ersten Rechner empfangenen Anforderung in der Reihenfolge, in der die Anforderungen empfangen werden und auf dem ersten Rechner ausgeführt werden sollen, wobei die eindeutige Sequenznummer für jede empfangene Anforderung inkrementiert wird (214);
Empfangen einer Nachfrage von dem zweiten Rechner nach jeder eindeutigen Sequenznummer von dem ersten Rechner (220);
Übertragen der eindeutigen Sequenznummern von dem ersten Rechner auf den zweiten Rechner (222);
Speichern der eindeutigen Sequenznummer in dem zweiten Rechner (241) und
Zuweisen jeder eindeutigen Sequenznummer zu einer entsprechenden der bei dem zweiten Rechner empfangenen mehreren Anforderungen, so dass die Anforderungen auf dem zweiten Rechner in der gleichen Reihenfolge wie der auf dem ersten Rechner ausgeführt werden können (242),
wobei eine bei dem zweiten Rechner empfangene Anforderung ausgeführt wird, wenn die vom ersten Rechner empfangene aktuelle eindeutige Sequenznummer um Eins höher ist als die in dem zweiten Rechner gespeicherte eindeutige Sequenznummer (242).

2. Verfahren nach Anspruch 1, wobei das Verfahren weiterhin das Zurückgeben der Ergebnisse des Ausführens der Anforderungen an den mindestens einen Prozess, der die Anforderungen initiierte, umfasst.

3. Verfahren nach Anspruch 2, weiterhin umfassend das Ausführen einer Anforderung auf dem zweiten Rechner vor dem Zurückgeben der Ausführungsergebnisse der entsprechenden Anforderung auf dem ersten Rechner an den Prozess, der die Anforderung initiierte.

4. Verfahren nach Anspruch 2, wobei der erste Rechner das Ergebnis des Prozesses, der die Anforderung initiierte, vor der Ausführung der Anforderung auf dem zweiten Rechner zurückgibt.

5. Verfahren nach einem vorhergehenden Anspruch, wobei der Übertragungsschritt das Kapseln mindestens einer eindeutigen Sequenznummer in einer Nachricht und Senden der Nachricht an den zweiten Rechner umfasst.

6. Verfahren nach einem vorhergehenden Anspruch, wobei die mehreren Anforderungen mindestens eine Art von Anforderung enthalten ausgewählt aus der Gruppe umfassend eine E/A-Anweisung und eine Interprozessanforderung.

7. Verfahren nach Anspruch 6, weiterhin umfassend das Berechnen einer ersten Prüfsumme, wenn eine Anforderung auf dem ersten Rechner ausgeführt worden ist, und das Berechnen einer zweiten Prüfsumme, wenn die gleiche Anforderung auf dem zweiten Rechner ausgeführt worden ist.

8. Verfahren nach Anspruch 7, weiterhin umfassend das Vergleichen der ersten Prüfsumme mit der zweiten Prüfsumme und, wenn sie nicht gleich sind, das Signalisieren eines Fehlerzustands.

9. Verfahren nach einem der Ansprüche 6 bis 8, weiterhin umfassend das Empfangen eines ersten Fertigstellungscodes, wenn eine Anforderung auf dem ersten Rechner ausgeführt worden ist, und das Empfangen eines zweiten Fertigstellungscodes, wenn die gleiche Anforderung auf dem zweiten Rechner ausgeführt worden ist.

10. Verfahren nach Anspruch 9, weiterhin umfassend das Vergleichen des ersten Fertigstellungscodes mit dem zweiten Fertigstellungscode und, wenn sie nicht gleich sind, das Signalisieren eines Fehlerzustands.

11. Verfahren nach einem der Ansprüche 7 bis 10, weiterhin umfassend das Kapseln der ersten Prüfsumme und/oder des ersten Fertigstellungscodes in einer Nachricht und das Übertragen der Nachricht an den ersten Rechner vor dem Ausführen des Vergleichsschritts.

12. Verfahren nach einem der Ansprüche 7 bis 11, weiterhin umfassend das Schreiben mindestens einer Art von Daten ausgewählt aus der Gruppe umfassend: ein Ausführungsergebnis, eine eindeutige Sequenznummer, eine eindeutige Prozessnummer, eine erste Prüfsumme und einen ersten Fertigstellungscode, in ein Protokoll und Speichern des Protokolls auf dem ersten Rechner.

13. Verfahren nach Anspruch 12, weiterhin umfassend das Lesen des Protokolls und, falls sich irgendwelche neuen Daten im Protokoll befinden, die noch nicht auf den zweiten Rechner übertragen worden sind, das Übertragen der neuen Daten auf den zweiten Rechner.

14. Verfahren nach Anspruch 13, wobei der Leseschritt periodisch erfolgt und die Anwesenheit neuer Daten bewirkt, dass der Übertragungsschritt automatisch erfolgt.

15. Verfahren nach einem der Ansprüche 12 bis 14, wobei die eindeutigen Sequenznummern entsprechend Anforderungen, die auf dem zweiten Rechner erfolgreich ausgeführt wurden, auf den ersten Rechner übertragen werden und das Verfahren weiterhin das Löschen dieser eindeutigen Sequenznummern und der diesen entsprechenden Daten aus dem Protokoll umfasst.

16. Verfahren nach einem der Ansprüche 1 bis 5, wobei die mehreren Anforderungen eine nichtdeterministische Funktion beinhalten.

17. Verfahren nach Anspruch 16 bei Abhängigkeit von Anspruch 2, wobei der Übertragungsschritt weiterhin das Übertragen der Ausführungsergebnisse auf den zweiten Rechner und das Zurückgeben der Ausführungsergebnisse zu dem mindestens einen Prozess, der die Anforderungen initiierte, umfasst.

18. Verfahren nach Anspruch 1, weiterhin umfassend das Ausführen der Anforderung nach dem Empfangen einer Nachfrage nach der eindeutigen Sequenznummer, die jener Anforderung von dem zweiten Rechner entspricht.

19. Verfahren nach einem vorhergehenden Anspruch, wobei eine der mehreren Anforderungen eine Anforderung für den Zugriff auf eine Datei ist und das Verfahren weiterhin das Ausführen einer einzigen Anforderung pro Datei vor dem Übertragen der entsprechenden Sequenznummer auf den zweiten Rechner umfasst.

20. Verfahren nach einem der Ansprüche 1 bis 18, wobei eine der mehreren Anforderungen eine Anforderung für den Zugriff auf eine Datei ist und das Verfahren weiterhin das Ausführen von mehreren Anforderungen vor dem Übertragen der entsprechenden Sequenznummern der mehreren zu dem zweiten Rechner umfasst, wobei der Ausführungsschritt durchgeführt wird, wenn die Anforderungen keinen Zugriff auf die gleichen Teile der Datei erfordern.

21. Verfahren nach einem vorhergehenden Anspruch, wobei der Zuweisungsschritt auf dem zweiten Rechner weiterhin das Warten darauf, dass eine vorhergehende Anforderung auf dem gleichen Rechner ausgeführt wird, bevor die aktuelle Anforderung ausgeführt wird, umfasst.

22. Verfahren nach einem vorhergehenden Anspruch, weiterhin umfassend das Synchronisieren von Daten sowohl auf dem ersten als auch auf dem zweiten Rechner, wobei der Synchronisierungsschritt Folgendes umfasst:
Lesen eines Datenabschnitts von dem ersten Rechner;
Zuweisen einer koordinierenden der eindeutigen Sequenznummern zu dem Datenabschnitt;
Senden des Datenabschnitts mit der koordinierenden Sequenznummer von dem ersten Rechner zu dem zweiten Rechner;
Speichern des empfangenen Datenabschnitts auf dem zweiten Rechner unter Verwendung der koordinierenden Sequenznummer, um zu bestimmen, wann der Speicherungsschritt implementiert werden soll;
Wiederholen der obigen Schritte, bis alle die Datenabschnitte des ersten Rechners auf den zweiten Rechner geschrieben worden sind, wobei die Verwendung der koordinierenden Sequenznummern sicherstellt, dass die auf dem zweiten Rechner gespeicherten Datenabschnitte in der gleichen Reihenfolge sind wie die aus dem ersten Rechner gelesenen Datenabschnitte.

23. Verfahren nach Anspruch 22, weiterhin umfassend das Empfangen einer Anforderung zum Aktualisieren der Daten sowohl auf dem ersten als auch auf dem zweiten Rechner und nur Aktualisieren jener Abschnitte von Daten, die auf dem ersten und zweiten Rechner synchronisiert worden sind.

24. Verfahren nach einem vorhergehenden Anspruch, weiterhin umfassend das Verifizieren von Daten sowohl auf dem ersten als auch auf dem zweiten Rechner, wobei der Verifizierungsschritt Folgendes umfasst:
Lesen eines ersten Datenabschnitts von dem ersten Rechner;
Zuweisen einer koordinierenden der eindeutigen Sequenznummern zu dem ersten Datenabschnitt;
Bestimmen einer ersten Charakteristik des ersten Datenabschnitts;
Zuweisen der gesendeten koordinierenden Sequenznummer zu einem aus dem zweiten Rechner zu lesenden entsprechenden zweiten Datenabschnitt;
Lesen eines zweiten Datenabschnitts aus dem zweiten Rechner unter Verwendung der koordinierenden Sequenznummer, um zu bestimmen, wann der Leseschritt implementiert werden soll;
Bestimmen einer zweiten Charakteristik des zweiten Datenabschnitts;
Vergleichen der ersten und zweiten Charakteristik, um zu verifizieren, dass der erste und der zweite Datenabschnitt der gleiche sind; und
Wiederholen der obigen Schritte, bis alle der Datenabschnitte des ersten und zweiten Rechners verglichen worden sind.

25. System zum Abgleichen der Statuskonfiguration eines ersten Rechners (14a) mit der Statuskonfiguration eines zweiten (Reserve-) Rechners (14b), wobei das System Folgendes umfasst:
Anforderungsverwaltungsmittel, ausgelegt zum Ausführen von mehreren Anforderungen sowohl auf dem ersten Rechner als auch auf dem zweiten Rechner, wobei die mehreren Anforderungen durch mindestens einen Prozess sowohl auf dem ersten als auch auf dem zweiten Rechner initiiert werden, wobei die Prozesse ein Prozesspaar bilden;
Erteilungsmittel zum Erteilen einer eindeutigen Prozesssequenznummer an jede durch den mindestens einen Prozess sowohl auf dem ersten als auch auf dem zweiten Rechner ausgeführte Anforderung, wobei die eindeutige Prozesssequenznummer von dem Erteilungsmittel inkrementiert wird, wenn eine Anforderung von dem entsprechenden Prozess empfangen wird (214, 238);
Sequenzierungsmittel zum Zuweisen einer eindeutigen Sequenznummer zu jeder an dem ersten Rechner empfangenen Anforderung in der Reihenfolge, in der die Anforderungen empfangen werden und auf dem ersten Rechner ausgeführt werden sollen, wobei die eindeutige Sequenznummer für jede empfangene Anforderung inkrementiert wird (214);
Empfangsmittel zum Empfangen einer Nachfrage von dem zweiten Rechner nach jeder eindeutigen Sequenznummer von dem ersten Rechner (220);
Übertragungsmittel zum Übertragen der eindeutigen Sequenznummern von dem ersten Rechner auf den zweiten Rechner (222);
Speicherungsmittel, ausgelegt zum Speichern der eindeutigen Sequenznummer in dem zweiten Rechner (241) und
Ordnungsmittel zum Zuweisen jeder Sequenznummer zu einer entsprechenden der bei dem zweiten Rechner empfangenen mehreren Anforderungen, so dass die Anforderungen auf dem zweiten Rechner in der gleichen Reihenfolge wie der auf dem ersten Rechner ausgeführt werden können,
wobei der zweite Rechner ausgelegt ist, eine empfangene Anforderung auszuführen, wenn die von dem ersten Rechner empfangene aktuelle eindeutige Sequenznummer um Eins höher ist als die in dem Speicherungsmittel gespeicherte vorhergehende eindeutige Sequenznummer (242).

26. System nach Anspruch 25, wobei das Übertragungsmittel weiterhin ausgelegt ist, die eindeutigen Sequenznummern in einer Nachricht zu kapseln und die Nachricht auf den zweiten Rechner zu übertragen.

27. System nach Anspruch 25 oder Anspruch 26, wobei der erste und zweite Rechner Server umfassen.

28. Verfahren zum Bereitstellen eines Reserverechners, umfassend: Abgleichen der Statuskonfiguration eines ersten Rechners mit der Statuskonfiguration eines Reserverechners unter Verwendung des in einem der Ansprüche 1 bis 24 beanspruchten Verfahrens; Detektieren eines Ausfall- oder Fehlerzustands im ersten Rechner und Aktivieren und Verwenden des Reserverechners anstelle des ersten Rechners.

29. Verfahren nach Anspruch 28, wobei der Verwendungsschritt weiterhin das Speichern von Änderungen bei der Statuskonfiguration des Reserverechners umfasst, so dass die Änderungen zu einem späteren Zeitpunkt auf den ersten Rechner angewendet werden können.

30. Verfahren nach Anspruch 1, wobei das Verfahren weiterhin Folgendes umfasst:
zusätzliches Empfangen von mehreren Anforderungen an einem dritten (zweiten Reserve-) Rechner;
Übertragen der eindeutigen Sequenznummern von dem ersten Rechner auf den zweiten und dritten Rechner und
Zuweisen jeder eindeutigen Sequenznummer zu einer entsprechenden der bei dem zweiten und dritten Rechner empfangenen mehreren Anforderungen, so dass die Anforderungen auf dem zweiten und dritten Rechner in der gleichen Reihenfolge wie der auf dem ersten Rechner ausgeführt werden können.

31. System nach Anspruch 25, wobei:
das Anforderungsverwaltungsmittel zusätzlich ausgelegt ist, mehrere Anforderungen auf einem dritten Rechner auszuführen;
das Übertragungsmittel ausgelegt ist, die eindeutigen Sequenznummern von dem ersten Rechner auf den zweiten und dritten Rechner zu übertragen und
das Ordnungsmittel ausgelegt ist, jede Sequenznummer einer entsprechenden der bei dem zweiten und dritten Rechner empfangenen mehreren Anforderungen zuzuweisen, so dass die Anforderungen auf dem zweiten und dritten Rechner in der gleichen Reihenfolge wie auf dem ersten Rechner ausgeführt werden können.

32. Datenträger umfassend ein Rechnerprogramm, das ausgelegt ist, einen Rechner zu konfigurieren, das in einem der Ansprüche 1 bis 24 und Ansprüche 28 bis 31 beanspruchte Verfahren zu implementieren.

## Revendications

1. Méthode de mise en correspondance de la configuration d'état d'un premier ordinateur (14a) avec la configuration d'état d'un second ordinateur (14b) (sauvegarde), pour la fourniture d'un substitut dans l'éventualité d'une panne du premier ordinateur, la méthode comprenant :
la réception d'une pluralité de requêtes à la fois au niveau du premier ordinateur et du second ordinateur, la pluralité de requêtes étant initiées par un processus, ou plus, sur à la fois le premier et le second ordinateurs, lesdits processus formant une paire de processus ;
la délivrance d'un numéro de séquence de processus unique pour chaque requête initiée par le processus, ou plus, sur à la fois le premier et le second ordinateurs, le numéro de séquence de processus unique étant incrémenté lorsqu'une requête est reçue en provenance du processus correspondant (214, 238) ;
l'assignation d'un numéro de séquence unique à chaque requête reçue au niveau du premier ordinateur dans l'ordre dans lequel les requêtes sont reçues et doivent être exécutées sur le premier ordinateur, le numéro de séquence unique étant incrémenté pour chaque requête reçue (214) ;
la réception d'une demande en provenance du second ordinateur pour chaque numéro de séquence unique en provenance du premier ordinateur (220) ;
le transfert des numéros de séquence uniques en provenance du premier ordinateur vers le second ordinateur (222) ;
le stockage du numéro de séquence unique dans le second ordinateur (241) ; et
l'assignation de chaque numéro de séquence unique à une requête correspondante parmi la pluralité de requêtes reçues au niveau du second ordinateur, de sorte que les requêtes puissent être exécutées sur le second ordinateur dans le même ordre que celles sur le premier ordinateur
dans laquelle une requête reçue au niveau du second ordinateur est exécutée lorsque le numéro de séquence unique en cours reçu en provenance du premier ordinateur est un numéro supérieur au numéro de séquence unique précédent dans le second ordinateur (242).

2. Méthode selon la revendication 1, comprenant en outre le retour des résultats de l'exécution des requêtes vers le processus, ou plus, qui a initié les requêtes.

3. Méthode selon la revendication 2, comprenant en outre l'exécution d'une requête sur le second ordinateur avant le retour des résultats d'exécution de la requête correspondante sur le premier ordinateur au processus qui a initié la requête.

4. Méthode selon la revendication 2, dans laquelle le premier ordinateur retourne les résultats du processus qui a initié la requête avant l'exécution de la requête sur le second ordinateur.

5. Méthode selon l'une quelconque des revendications précédentes, dans laquelle l'étape de transfert comprend l'encapsulation d'un numéro de séquence unique, ou plus, dans un message, et l'envoi du message vers le second ordinateur.

6. Méthode selon l'une quelconque des revendications précédentes, dans laquelle la pluralité de requêtes inclut un type, ou plus, de requête choisi dans le groupe constitué d'une instruction d'E/S et d'une requête interprocessus.

7. Méthode selon la revendication 6, comprenant en outre le calcul d'une première somme de contrôle lorsqu'une requête a été exécutée sur le premier ordinateur, et le calcul d'une seconde somme de contrôle lorsque la même requête a été exécutée sur le second ordinateur.

8. Méthode selon la revendication 7, comprenant en outre la comparaison de la première somme de contrôle avec la deuxième somme de contrôle et, si elles ne sont pas égales, le signalement d'une condition d'erreur.

9. Méthode selon l'une quelconque des revendications 6 à 8, comprenant en outre la réception d'un premier code d'achèvement lorsqu'une requête a été exécutée sur le premier ordinateur, et la réception d'un second code d'achèvement lorsque la même requête a été exécutée sur le second ordinateur.

10. Méthode selon la revendication 9, comprenant en outre la comparaison du premier code d'achèvement avec le seconde code d'achèvement, et s'ils ne sont pas égaux, le signalement d'une condition d'erreur.

11. Méthode selon l'une quelconque des revendications 7 à 10, comprenant en outre l'encapsulation de la première somme de contrôle et/ou du premier code d'achèvement dans un message, et le transfert du message au premier ordinateur avant de procéder à l'étape de comparaison.

12. Méthode selon l'une quelconque des revendications 7 à 11, comprenant en outre l'écriture dans un fichier-journal de données d'un type, ou plus, de données choisi dans le groupe constitué par : un résultat d'exécution, un numéro de séquence unique, un numéro de processus unique, une première somme de contrôle et un premier code d'achèvement, et le stockage du fichier-journal de données sur le premier ordinateur.

13. Méthode selon la revendication 12, comprenant en outre la lecture du fichier-journal de données et, s'il existe des données quelconques dans le fichier-journal de données qui n'ont pas été transférées vers le second ordinateur, le transfert des nouvelles données vers le second ordinateur.

14. Méthode selon la revendication 13, dans laquelle l'étape de lecture se produit périodiquement et la présence de nouvelles données entraîne l'exécution automatique de l'étape de transfert.

15. Méthode selon l'une quelconque des revendications 12 à 14, dans laquelle les numéros de séquence uniques correspondants aux requêtes qui ont été exécutées avec succès sur le second ordinateur sont transférés au premier ordinateur, et la méthode comprend en outre la suppression de ces numéros de séquence uniques et des données correspondantes à ceux-ci du fichier-journal de données.

16. Méthode selon l'une quelconque des revendications 1 à 5, dans laquelle la pluralité de requêtes inclut une fonction non déterministe.

17. Méthode selon la revendication 16 en tant que dépendante de la revendication 2, dans laquelle l'étape de transfert comprend le transfert des résultats d'exécution au processus, ou plus, qui a initié les requêtes.

18. Méthode selon la revendication 1, comprenant en outre l'exécution d'une requête après réception de la demande du numéro de séquence unique qui correspond à la requête en provenance du second ordinateur.

19. Méthode selon l'une quelconque des revendications précédentes, dans laquelle une requête parmi la pluralité de requêtes est une requête d'accès à un fichier, et la méthode comprend en outre l'exécution d'une seule requête par fichier avant le transfert au second ordinateur du numéro de séquence correspondant.

20. Méthode selon l'une quelconque des revendications 1 à 18, dans laquelle une requête parmi la pluralité de requêtes est une requête d'accès à un fichier, et la méthode comprend en outre l'exécution d'une pluralité de requêtes avant le transfert au second ordinateur des numéros de séquence uniques de la pluralité, l'étape d'exécution étant menée si les requêtes ne nécessitent pas d'accès aux mêmes parties du fichier.

21. Méthode selon l'une quelconque des revendications précédentes, dans laquelle l'étape d'assignation sur le second ordinateur comprend en outre l'attente de l'exécution d'une requête précédente sur le même ordinateur avant l'exécution de la requête en cours.

22. Méthode selon l'une quelconque des revendications précédentes, comprenant en outre la synchronisation des données sur à la fois le premier et le second ordinateur, l'étape de synchronisation comprenant :
la lecture d'une partie des données en provenance du premier ordinateur ;
l'assignation à la partie des données d'un numéro de coordination parmi les numéros de séquence uniques ;
la transmission de la partie de données avec le numéro de séquence de coordination en provenance du premier ordinateur au second ordinateur ;
le stockage de la partie des données reçues sur le second ordinateur, en utilisant le numéro de séquence de coordination pour déterminer quand mettre en oeuvre l'étape de stockage ;
la répétition des étapes précédentes jusqu'à ce que toutes les parties de données du premier ordinateur aient été écrites sur le second ordinateur, l'utilisation des numéros de séquence de coordination permettant que les parties de données stockées sur le second ordinateur soient dans le même ordre que les parties de données lues en provenance du premier ordinateur.

23. Méthode selon la revendication 22, comprenant en outre la réception d'une requête pour la mise à jour des données à la fois sur le premier et sur le second ordinateurs, et en mettant à jour uniquement ces parties de données qui ont été synchronisées sur le premier et le second ordinateurs.

24. Méthode selon l'une quelconque des revendications précédentes, comprenant en outre la vérification des données à la fois sur le premier et sur le second ordinateurs, l'étape de vérification comprenant :
la lecture d'une partie des données en provenance du premier ordinateur ;
l'assignation à la première partie des données d'un numéro de coordination parmi les numéros de séquence uniques ;
la détermination d'une première caractéristique de la première partie des données ;
la transmission de la partie de données avec le numéro de séquence de coordination en provenance du premier ordinateur vers le second ordinateur ;
le stockage de la partie de données reçues sur le second ordinateur, en utilisant le numéro de séquence de coordination pour déterminer quand mettre en oeuvre l'étape de stockage ;
la répétition des étapes précédentes jusqu'à ce que toutes les parties de données du premier ordinateur aient été comparées.

25. Système destiné à la mise en correspondance de la configuration d'état d'un premier ordinateur (14a) avec la configuration d'état d'un second ordinateur (14b) (sauvegarde), le système comprenant :
des moyens de gestion de la requête disposés pour exécuter une pluralité de requêtes à la fois sur le premier et sur le second ordinateurs, la pluralité de requêtes étant initiée par un processus, ou plus, à la fois sur le premier et sur le second ordinateurs, lesdits processus formant une paire de processus ;
des moyens d'émission pour l'émission d'un numéro de séquence de processus unique à chaque requête exécutée par un processus, ou plus, à la fois sur le premier et sur le second ordinateurs, le numéro de séquence de processus unique étant incrémenté par les moyens d'émission lorsqu'une requête est reçue en provenance des processus correspondants (214, 238) ;
des moyens de séquençage pour l'assignation d'un numéro de séquence unique à chaque requête reçue au niveau du premier ordinateur dans l'ordre dans lequel les requêtes sont reçues et doivent être exécutées sur le premier ordinateur, le numéro de séquence unique étant incrémenté pour chaque requête reçue (214) ;
des moyens de réception pour la réception d'une demande en provenance du second ordinateur pour chaque numéro de séquence unique en provenance du premier ordinateur (220) ;
des moyens de transfert pour le transfert des numéros de séquence uniques en provenance du premier ordinateur vers le second ordinateur (222) ;
des moyens de stockage disposés pour le stockage du numéro de séquence unique dans le second ordinateur (241) ; et
des moyens de mise en ordre pour l'assignation de chaque numéro de séquence unique à la requête correspondante parmi la pluralité de requêtes reçues au niveau du second ordinateur, de sorte que les requêtes puissent être exécutées sur le second ordinateur dans le même ordre que sur le premier ordinateur
dans lequel le second ordinateur est disposé pour exécuter une requête reçue lorsque le numéro de séquence unique en cours reçu en provenance du premier ordinateur est un numéro supérieur au numéro de séquence unique précédent stocké dans les moyens de stockage (242).

26. Système selon la revendication 25, dans lequel les moyens de transfert sont en outre disposés pour encapsuler les numéros de séquence uniques dans un message, et pour transférer le message au second ordinateur.

27. Système selon la revendication 25 ou la revendication 26, dans lequel le premier et le second ordinateurs sont des serveurs.

28. Méthode de fourniture d'un ordinateur de sauvegarde comprenant :
la mise en correspondance de la configuration d'état d'un premier ordinateur avec la configuration d'état de l'ordinateur de sauvegarde en utilisant la méthode selon l'une quelconque des revendications 1 à 24 ; la détection d'une panne ou d'une condition d'erreur dans le premier ordinateur ; et l'activation ainsi que l'utilisation de l'ordinateur de sauvegarde à la place du premier ordinateur.

29. Méthode selon la revendication 28, dans laquelle l'étape d'utilisation comprend en outre le stockage des changements dans la configuration d'état de l'ordinateur de sauvegarde, de sorte que les changements puissent être ultérieurement appliqués au premier ordinateur.

30. Méthode selon la revendication 1, comprenant en outre :
la réception supplémentaire d'une pluralité de requêtes d'un troisième ordinateur (seconde sauvegarde) ;
le transfert des numéros de séquence uniques en provenance du premier ordinateur vers le second et le troisième ordinateurs ; et
l'assignation de chaque numéro de séquence unique à une requête correspondante parmi la pluralité de requêtes reçues au niveau du second et du troisième ordinateurs, de sorte que les requêtes puissent être exécutées sur le second et le troisième ordinateur dans le même ordre que sur le premier ordinateur.

31. Système selon la revendication 25, dans lequel :
les moyens de gestion des requêtes sont en outre disposés pour exécuter une pluralité de requêtes sur le troisième ordinateur ;
les moyens de transfert sont disposés pour transférer les numéros de séquence uniques en provenance du premier ordinateur vers le second et le troisième ordinateurs ; et
les moyens de mise en ordre sont disposés pour assigner chaque numéro de séquence unique à une requête correspondante parmi la pluralité de requêtes reçues au niveau du second et du troisième ordinateurs, de sorte que les requêtes puissent être exécutées sur le second et le troisième ordinateurs dans le même ordre que sur le premier ordinateur.

32. Support de données constitué d'un programme informatique disposé de façon à configurer un ordinateur pour mettre en oeuvre la méthode selon l'une quelconque des revendications 1 à 24 et des revendications 28 à 31.
